(19) Europäisches Patentamt / European Patent Office / Office européen des brevets

(11) **EP 4 216 248 A1**

(12) **EUROPEAN PATENT APPLICATION**
published in accordance with Art. 153(4) EPC

(43) Date of publication:
**26.07.2023 Bulletin 2023/30**

(21) Application number: **21869427.1**

(22) Date of filing: **16.09.2021**

(51) International Patent Classification (IPC):
**H01G 11/06** (2013.01)   **H01G 11/52** (2013.01)
**H01M 50/409** (2021.01)

(52) Cooperative Patent Classification (CPC):
**H01G 11/52; H01M 50/409;** H01G 9/02;
H01G 11/06; Y02E 60/10

(86) International application number:
**PCT/JP2021/034173**

(87) International publication number:
**WO 2022/059744 (24.03.2022 Gazette 2022/12)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority:
18.09.2020   JP 2020157278
18.09.2020   JP 2020157298
18.09.2020   JP 2020157385
18.09.2020   JP 2020157431
01.09.2021   JP 2021142577
01.09.2021   JP 2021142586
01.09.2021   JP 2021142591

(71) Applicant: **Asahi Kasei Kabushiki Kaisha Tokyo 100-0006 (JP)**

(72) Inventors:
• **HAMASAKI, Shinya**
  **Tokyo 100-0006 (JP)**
• **TAKAHASHI, Masaki**
  **Tokyo 100-0006 (JP)**
• **TAGAWA, Tomoya**
  **Tokyo 100-0006 (JP)**
• **SAITO, Mitsuko**
  **Tokyo 100-0006 (JP)**

(74) Representative: **Strehl Schübel-Hopf & Partner Maximilianstrasse 54 80538 München (DE)**

(54) **SEPARATOR FOR POWER STORAGE DEVICE, AND POWER STORAGE DEVICE**

(57)   Provided are a thin-film separator for a power storage device, the separator having high strength and reduced clogging, and a power storage device separator that provides high strength, high level of safety, and high dimensional stability at high temperature, and that can be formed in a thin film. One aspect provides a power storage device separator comprising a fine-porous layer (X) consisting mainly of polyolefin (A), the fine-porous layer (X) having a melt flow rate of less than or equal to 0.9 g/10 min, and having an average long-hole diameter of more than or equal to 100 nm according to MD-TD surface observation or ND-MD cross-sectional observation with a scanning electron microscope. One aspect provides a power storage device separator comprising a fine-porous layer, the fine-porous layer comprising a polyolefin having a melt flow rate of less than or equal to 0.7 g/10 min, the power storage device separator having a short temperature of more than or equal to 200°C and a thermal shrinkage of TD $\leqq$ 1% and MD $\leqq$ 4%.

EP 4 216 248 A1

**Description**

FIELD

The present invention relates to an electricity storage device separator.

BACKGROUND

Microporous membranes, particularly polyolefin-based microporous membranes, are used in many technical fields such as microfiltration membranes, cell separators, capacitor separators, and fuel cell materials, and are particularly used as separators for electricity storage devices typified by lithium-ion cells. In addition to applications in compact electronic devices such as mobile phones and notebook computers, lithium-ion cells are being used in various applications such as electric vehicles, including hybrid vehicles and plug-in hybrid vehicles.

In recent years, lithium-ion cells having high energy capacity, high energy density, and high output characteristics have been in demand, along with an increasing demand for thin-film separators having high strength (for example, high puncture strength).

PTL 1 discloses a polypropylene resin composition for microporous films, comprising, from the viewpoints of rigidity of the microporous film and reduction of product defect rate at a constant thickness, 5 to 30% by weight of a polypropylene resin (X) and 95 to 70% by weight of a polypropylene resin (Y). The polypropylene resin (X) described in PTL 1 has a specific melt flow rate (MFR), molecular weight distribution (Mw/Mn), and long-chain branched structure. The polypropylene resin (Y) described in PTL 1 has a specific MFR and excludes the polypropylene resin (X).

PTL 2 discloses a microporous membrane having the following three layers (a) to (c), from the viewpoint of an improved balance of electrochemical stability, high meltdown temperature, high electrolyte affinity, and low moisture retention of the microporous membrane:

(a) a first layer containing 40.0 to 85.0% by weight of isotactic polypropylene having a weight average molecular weight of $6.0 \times 10^5$ or greater,
(b) a second layer containing a polyolefin, and
(c) a third layer containing 40.0 to 85.0% by weight of isotactic polypropylene having a Mw of $6.0 \times 10^5$ or greater.

PTL 3 discloses a laminated microporous film, comprising a first microporous film comprising a first resin composition having a melting point $T_{mA}$ and a second microporous film comprising a second resin composition having a melting point $T_{mB}$ that is lower than the melting point $T_{mA}$, and having an extensional viscosity of 18000 to 40000 Pa·s and a shear viscosity of 5000 to 10000 Pa·s.

PTL 4 discloses a propylene-based resin microporous film, composed of a propylene-based resin in which components having a molecular weight of 50000 or less is present in an amount of 25 to 60% by weight, components having a molecular weight of 700000 or greater is present in an amount of 19 to 30% by weight, the weight average molecular weight is 350000 to 500000, and the melt tension is 1.1 to 3.2 g.

PTL 5 discloses a polypropylene resin composition for microporous membrane formation, having a limiting viscosity [η] of 1 dl/g or more and less than 7 dl/g, a meso-pentad fraction in a range of 94.0 to 99.5%, an elution integral volume of 10% or less when heated up to 100 °C, and a melting point of 153 to 167 °C, wherein the polypropylene resin composition has a peak-top temperature at a maximum peak of 105 to 130 °C and a half-width at the peak of 7.0 °C or lower in an elution temperature-elution volume curve, and includes a propylene homopolymer as an indispensable component.

PTL 6 discloses a polyolefin microporous membrane comprising a polypropylene-based resin, wherein the polyolefin microporous membrane has a meltdown temperature of 195 °C or higher and 230 °C or lower, and describes that the polypropylene-based resin may have a weight average molecular weight of 500000 or greater and 800000 or less, and may have a molecular weight distribution of 7.5 or greater and 16 or less.

PTL 7 discloses a laminated microporous film, comprising a first microporous film composed of a first resin composition and a second microporous film composed of a second resin composition laminated together, wherein the first resin composition and the second resin composition both have an MFR of 1.0 g/10 min or less, and the resin contained in the first resin composition has a molecular weight distribution (Mw/Mn) of 10 or greater.

[CITATION LIST]

[PATENT LITERATURE]

[PTL 1] Japanese Unexamined Patent Publication (Kokai) No. 2018-030992
[PTL 2] Japanese Unexamined PCT Publication (Kohyo) No. 2013-517152
[PTL 3] Japanese Unexamined Patent Publication (Kokai) No. 2016-022676
[PTL 4] Japanese Unexamined Patent Publication (Kokai) No. 2012-092286
[PTL 5] WO 2010/079784
[PTL 6] WO 2017/138512
[PTL 7] Japanese Unexamined Patent Publication (Kokai) No. 2016-22679

SUMMARY

[TECHNICAL PROBLEM]

It is known that the use of polyolefins having a high molecular weight in microporous membranes can provide microporous membranes having high strength.

However, when a polyolefin having a high molecular weight is used in manufacturing a microporous membrane, the film-forming characteristic and the pore-opening characteristic at the time of manufacturing are insufficient, and the pore diameter of the microporous membrane decreases, leading to the deterioration of air permeability (specifically, air permeability resistance) and an increase in viscosity when melted, whereby the production of a thin-film (for example, a thickness of 20 $\mu$m or less) separator tends to be difficult. Therefore, an object of an aspect of the present invention (more specifically, the first aspect of the present disclosure) is to provide a thin-film electricity storage device separator which has high strength and suppresses clogging due to long-term use. In a specific aspect, the object is to provide an electricity storage device separator which contributes to high safety of an electricity storage device and has high strength (particularly high puncture strength) and high dimensional stability at high temperatures, while having a high output and allowing for film thinning.

Since a polyolefin having a high molecular weight has high viscosity when melted, as described above, film thinning is difficult. For example, the separator described in the aforementioned PTL 6 is imparted with high safety, but does not allow for film thinning due to an excessively high melt tension. According to the technique described in PTL 7, film thinning via coextrusion can be achieved, but high output characteristics cannot be obtained. Further, the separators described in PTLs 6 and 7 both tend to have low cell safety at high temperatures. According to PTLs 3 and 5, although heat shrinkage rate of the separators can be reduced, both have low viscosity when melted, and are thus expected to have low safety. From these points, improvements can be made in terms of obtaining a separator which allows for film thinning while achieving high degrees of strength, safety, and dimensional stability at high temperatures. Therefore, an object of an aspect of the present invention (more specifically, the second aspect of the present invention) is to provide an electricity storage device separator having high strength, high safety, and high dimensional stability at high temperatures and allowing for film thinning.

[SOLUTION TO PROBLEM]

Examples of an embodiment of the present invention are listed as follows.

[1] An electricity storage device separator comprising

a microporous layer (X) mainly composed of a polyolefin (A), wherein
a melt flow rate (MFR) of the microporous layer (X) at a load of 2.16 kg and a temperature of 230 °C is 0.9 g/10 min or less, and
in an MD-TD surface observation or an ND-MD cross-section observation of the microporous layer (X) by a scanning electron microscope (SEM), an average long pore diameter of pores present in the microporous layer (X) is 100 nm or more.

[2] The electricity storage device separator according to the above Aspect 1, wherein
in an MD-TD surface observation or an ND-MD cross-section observation of the microporous layer (X) by the scanning electron microscope (SEM), a maximum long pore diameter of pores present in the microporous layer (X) is 100 nm or more and 400 nm or less.
[3] The electricity storage device separator according to the above Aspect 1 or 2, wherein
a melt tension of the microporous layer (X) when measured at a temperature of 230 °C is 16 mN or more.
[4] The electricity storage device separator according to the above Aspect 1 or 2, wherein
a melt tension of the microporous layer (X) when measured at a temperature of 230 °C is 16 mN or more and 40 mN or less.

[5] The electricity storage device separator according to any of the above Aspects 1 to 4, wherein
a ratio (SMD/STD) of tensile strength in machine direction (SMD) to tensile strength in width direction (STD) of the electricity storage device separator is SMD/STD > 5.

[6] The electricity storage device separator according to any of the above Aspects 1 to 5, wherein

> a heat shrinkage rate of the electricity storage device separator after 1 h of heat treatment at 105 °C is 1% or less in TD and 4% or less in MD, and
> a heat shrinkage rate of the electricity storage device separator after 1 h of heat treatment at 120 °C is 1% or less in TD and 10% or less in MD.

[7] The electricity storage device separator according to any of the above Aspects 1 to 6, wherein
an air permeability of the electricity storage device separator when converted into a thickness of 14 μm is 250 s/100 cm$^3$ or less.

[8] The electricity storage device separator according to any of the above Aspects 1 to 7 having a thickness of 8 μm or more and 18 μm or less and a puncture strength of 230 gf or more when the separator is converted into a thickness of 14 μm.

[9] The electricity storage device separator according to any of the above Aspects 1 to 8, wherein
the polyolefin (A) comprises polypropylene.

[10] The electricity storage device separator according to the above Aspect 9, wherein
a ratio of the polypropylene to the polyolefin (A) is 50 to 100% by mass.

[11] The electricity storage device separator according to the above Aspect 9 or 10, wherein
a pentad fraction of the polypropylene is 95.0% or greater.

[12] The electricity storage device separator according to any of the above Aspects 1 to 11, wherein
a weight average molecular weight (Mw) of the microporous layer (X) is 500,000 or greater and 1,500,000 or less.

[13] The electricity storage device separator according to any of the above Aspects 1 to 12, wherein
a value (Mw/Mn) obtained by dividing a weight average molecular weight (Mw) by a number average molecular weight (Mn) of the microporous layer (X) is 6 or less.

[14] The electricity storage device separator according to any of the above Aspects 1 to 13, further comprising a microporous layer (Y) mainly composed of a polyolefin (B).

[15] The electricity storage device separator according to the above Aspect 14, wherein

> in an ND-MD cross-section observation of the microporous layer (X) and the microporous layer (Y) by the scanning electron microscope (SEM),
> an average long pore diameter of pores present in the microporous layer (X) is 100 nm or more and 400 nm or less, and
> an average long pore diameter of pores present in the microporous layer (Y) is larger than the average long pore diameter of pores present in the microporous layer (X).

[16] The electricity storage device separator according to the above Aspect 14 or 15, wherein in an ND-MD cross-section observation of the microporous layer (X) and the microporous layer (Y) by the scanning electron microscope (SEM), an average long pore diameter of pores present in the microporous layer (Y) is 150 nm or more and 2000 nm or less and is 1.2 times or greater and 10 times or less of an average long pore diameter of pores present in the microporous layer (X).

[17] The electricity storage device separator according to any of the above Aspects 14 to 16, wherein

> a main component of the polyolefin (A) is polypropylene, and
> a main component of the polyolefin (B) is polyethylene.

[18] The electricity storage device separator according to any of the above Aspects 1 to 17, wherein
a porosity of the electricity storage device separator is 20% or greater and 70% or less.

[19] The electricity storage device separator according to any of the above Aspects 1 to 18, wherein

> a main component of the polyolefin (A) is polypropylene, and
> a melt flow rate (MFR) of the polypropylene at a load of 2.16 kg and a temperature of 230 °C is 0.6 g/10 min or less.

[20] An electricity storage device, comprising
the electricity storage device separator according to any of the above Aspects 1 to 19.

[21] An electricity storage device separator comprising a microporous layer, wherein

the microporous layer comprises a polyolefin having a melt flow rate (MFR) of 0.7 g/10 min or less at a load of 2.16 kg and a temperature of 230 °C,

a short-circuit temperature in a fuse short-circuit test of the electricity storage device separator is 200 °C or higher, and

a heat shrinkage rate in width direction (TD) and a heat shrinkage rate in machine direction (MD) when the electricity storage device separator is heat-treated at 105 °C for 1 h are TD ≤ 1% and MD <_ 4%, respectively.

[22] The electricity storage device separator according to the above Aspect 21, wherein the polyolefin is mainly composed of polypropylene.

[23] The electricity storage device separator according to the above Aspect 21 or 22, wherein a value (Mw/Mn) obtained by dividing a weight average molecular weight (Mw) by a number average molecular weight (Mn) of the polyolefin is 7 or less.

[24] The electricity storage device separator according to any of the above Aspects 21 to 23, wherein the fuse temperature in the fuse short-circuit test is 150 °C or lower.

[25] The electricity storage device separator according to any of the above Aspects 21 to 24, comprising a multilayer structure of a microporous layer mainly composed of polypropylene and a microporous layer mainly composed of polyethylene.

[26] The electricity storage device separator according to any of the above Aspects 21 to 25, wherein in a wide-angle X-ray scattering measurement of the microporous layer, a ratio MD/TD of an orientation ratio in machine direction (MD) to an orientation ratio in width direction (TD) is 1.3 or greater.

[27] The electricity storage device separator according to any of the above Aspects 21 to 26 having a thickness of 18 $\mu$m or less, a porosity of 42% or greater, and an air permeability resistance of 250 s/100 cm$^3$ or less when converted into a thickness of 14 $\mu$m.

[28] An electricity storage device, comprising the electricity storage device separator according to any of the above Aspects 21 to 27.

[ADVANTAGEOUS EFFECTS OF INVENTION]

According to one aspect of the present invention (more specifically, the first aspect of the present disclosure), an electricity storage device separator having high strength and capable of suppressing clogging within an electricity storage device such as a lithium-ion secondary cell can be provided. According to a specific aspect, an electricity storage device separator which contributes to high safety of an electricity storage device and has high strength (particularly high puncture strength) and high dimensional stability at high temperatures, while having high output and allowing for film thinning, can be provided.

According to one aspect of the present invention (more specifically, the second aspect of the present disclosure), an electricity storage device separator having high strength, high safety, and high dimensional stability at high temperatures and allowing for film thinning can be provided.

Note that, the above description should not be considered as disclosing all embodiments of the present invention or all advantages related to the present invention. Further embodiments of the present invention and the advantages thereof will be clarified with reference to the following description.

BRIEF DESCRIPTION OF DRAWINGS

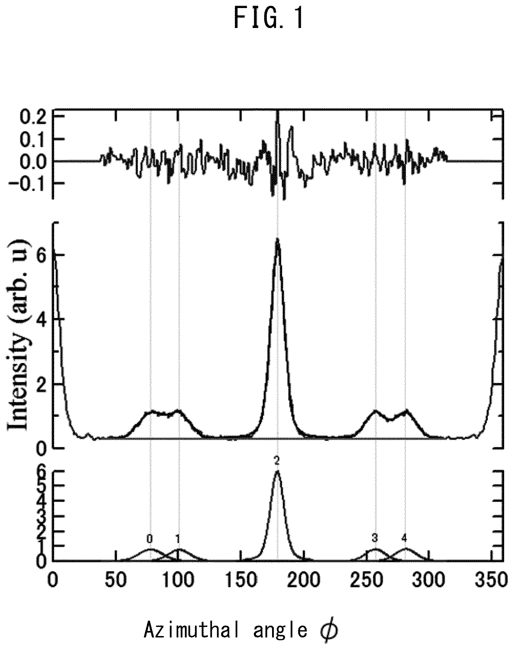

FIG. 1 is a diagram showing an example of azimuthal angle distribution of scattering intensities for describing measurement of the (110) crystal peak area ratio (MD/TD) in wide-angle X-ray scattering.

DESCRIPTION OF EMBODIMENTS

Hereinafter, an embodiment of the present invention (hereinafter referred to as "the present embodiment") will be described in detail for the purpose of exemplifying the embodiments. However, the present invention is not limited to the present embodiment.

<<Electricity storage device separator>>

In one aspect, the electricity storage device separator of the present disclosure comprises one or more microporous layers comprising a polyolefin or mainly composed of a polyolefin. In one aspect, the microporous layer or the polyolefin constituting the microporous layer has a specific melt flow rate (MFR). In one aspect, the electricity storage device separator has one or more of the advantages mentioned in the present disclosure. Hereinafter, a first aspect and a second aspect will be described as non-limiting examples of the present invention.

(1) First aspect

<Microporous layer>

The electricity storage device separator according to the first aspect comprises a microporous layer comprising a polyolefin. In one aspect, the microporous layer is mainly composed of a polyolefin. In the present embodiment, the microporous layer refers to one microporous layer constituting the electricity storage device separator. Two or more thereof may be laminated and used as a multilayer. In one aspect, the electricity storage device separator includes a microporous layer (X) mainly composed of a polyolefin (A). The electricity storage device separator may further comprise a microporous layer (Y) mainly composed of a polyolefin (B) as desired.

When the separator is formed of multiple microporous layers, by attaching an adhesive tape to a separator edge and then pulling on the tape, each microporous layer can be easily peeled off and collected, and the melt tension, melt flow rate (MFR), molecular weight, long pore diameter, porosity, thickness, and other physical properties, which will be described below, can be measured.

<Microporous layer (X)>

The electricity storage device separator of the present embodiment includes a microporous layer (X). The electricity storage device separator may include only one layer of the microporous layer (X) or two or more layers thereof. In the present embodiment, being mainly composed of a polyolefin (A) refers to comprising 50% by mass or greater of the polyolefin (A) based on the total mass of the microporous layer (X). The lower limit of the content of the polyolefin (A) in the microporous layer (X), from the viewpoints of separator wettability with an electrolytic solution, film thinning, and shutdown characteristics, is 50% by mass or greater in one aspect, and more preferably 55% by mass or greater, 60% by mass or greater, 70% by mass or greater, 80% by mass or greater, 90% by mass or greater, or 95% by mass or greater. The upper limit of the content of the polyolefin (A) in the microporous layer (X) may be, for example, 60% by mass or less, 70% by mass or less, 80% by mass or less, 90% by mass or less, 95% by mass or less, 98% by mass or less, or 99% by mass or less, or may be 100% by mass.

<Polyolefin (A)>

The polyolefin (A) of the present embodiment is a polymer comprising a monomer having a carbon-carbon double bond as a repeating unit. Examples of the monomer constituting the polyolefin (A) include, but are not limited to, monomers having 1 or more and 10 or less carbon-carbon double bonds, such as ethylene, propylene, 1-butene, 4-methyl-1-pentene, 1-hexene, and 1-octene. The polyolefin (A) is, for example, a homopolymer, a copolymer, or a multistage polymer, and is preferably a homopolymer.

It is preferable that the polyolefin (A), specifically from the viewpoint of shutdown characteristics, be polyethylene, polypropylene, a copolymer of ethylene and propylene, or a mixture thereof. It is more preferable that the polyolefin (A) comprise polypropylene or be polypropylene. From the same viewpoint, the lower limit of the ratio of polypropylene to the polyolefin (A) that is a main component of the microporous layer (X) is preferably 50% by mass or greater, more preferably 60% by mass or greater, and even more preferably 70% by mass or greater. The lower limit of the ratio of polypropylene to the polyolefin (A) that is a main component of the microporous layer (X) is preferably 100% by mass or less.

Examples of tacticity of the polypropylene include, but are not limited to, atactic, isotactic, and syndiotactic polypropylene. The polypropylene according to the present embodiment is preferably an isotactic or syndiotactic homopolymer having high crystallinity.

A polypropylene that can be used as the polyolefin (A) is preferably a homopolymer, and may be a copolymer, such as a block polymer, obtained by copolymerizing a comonomer other than propylene, such as an $\alpha$-olefin comonomer. The lower limit of the amount of propylene structure included as a repeating unit in the polypropylene may be, for example, 70 mol% or greater, 80 mol% or greater, 90 mol% or greater, 95 mol% or greater, or 99 mol% or greater. The polypropylene may include a repeating unit having a structure other than propylene structure. In that case, the upper limit of the amount of a repeating unit (excluding the propylene structure) from the comonomer may be, for example, 30 mol% or less, 20 mol% or less, 10 mol% or less, 5 mol% or less, or 1 mol% or less. For the polypropylene, one type can be used alone, or two or more types can be mixed and used.

The lower limit of weight average molecular weight (Mw) of the polyolefin (A), from the viewpoint of strength of the microporous layer (X), is preferably 300,000 or greater, more preferably 500,000 or greater, even more preferably 600,000 or greater, still more preferably 700,000 or greater, and particularly preferably 800,000 or greater. The upper limit of weight average molecular weight (Mw) of the polyolefin (A), from the viewpoint of increasing pore diameter in the microporous layer (X) and suppressing clogging to obtain a high output, is preferably 1,500,000 or less, more preferably 1,300,000 or less, even more preferably 1,100,000 or less, still more preferably 1,000,000 or less, and particularly preferably 960,000 or less.

The upper limit value of the value (Mw/Mn) obtained by dividing the weight average molecular weight (Mw) by the number average molecular weight (Mn) of the polyolefin (A) is preferably 7 or less, 6.5 or less, 6 or less, 5.5 or less, or 5 or less. The smaller the value of Mw/Mn, the less the entanglement among the molecules, and thus the melt tension of the resulting microporous layer (X) tends to be lower. Therefore, it is preferable that the value of Mw/Mn of the polyolefin (A) be 7 or less so that the melt tension of the microporous layer (X) can be kept low and the microporous layer (X) can be stably produced as a thin film. Further, the lower limit value of Mw/Mn of the polyolefin (A) is preferably 1 or greater, 1.3 or greater, 1.5 or greater, 2.0 or greater, or 2.5 or greater. By having Mw/Mn at 1 or greater, moderate molecular entanglement is maintained, and stability tends to be satisfactory during film formation.

Conventional separators often have a thickness of 20 $\mu$m to 40 $\mu$m. Particularly in separators having a multilayer structure, producing a separator thinner than the above is difficult. It is considered that the use of polyolefins having a high molecular weight increases melt tension during film formation, which makes stably forming a thin microporous layer difficult. Controlling the molecular weight of the polyolefin (A) and the molecular weight distribution represented by Mw/Mn within the numerical ranges described above is advantageous from the viewpoint of producing a thinner separator.

When the polyolefin (A) comprises polypropylene or is polypropylene, the lower limit of the weight average molecular weight (Mw) of the polypropylene, from the viewpoint of strength of the microporous layer (X), is preferably 300,000 or greater, more preferably 500,000 or greater, even more preferably 600,000 or greater, still more preferably 700,000 or greater, and particularly preferably 800,000 or greater. The upper limit of Mw of the polypropylene, from the viewpoints of increasing pore diameter in the microporous layer and suppressing clogging, is preferably 1,500,000 or less, more preferably 1,300,000 or less, even more preferably 1,100,000 or less, still more preferably 1,000,000 or less, and particularly preferably 960,000 or less.

When the polyolefin (A) comprises polypropylene or is polypropylene, the upper limit value of the value (Mw/Mn) obtained by dividing the weight average molecular weight (Mw) by the number average molecular weight (Mn) of the polypropylene is preferably 7 or less, 6.5 or less, 6 or less, 5.5 or less, or 5 or less. The smaller the value of Mw/Mn of the polypropylene, the lower the melt tension of the resulting microporous layer (X) tends to be. Therefore, it is preferable that the value of Mw/Mn of the polypropylene be 7 or less so that the melt tension of the microporous layer (X) is controlled to 30 mN or less. Further, the Mw/Mn of the polypropylene is preferably 1 or greater, 1.3 or greater, 1.5 or greater, 2.0 or greater, or 2.5 or greater. By having the Mw/Mn of the polypropylene at 1 or greater, moderate molecular entanglement is maintained, and stability tends to be satisfactory during film formation.

In the present embodiment, each of the weight average molecular weight (Mw), the number average molecular weight (Mn) and the Mw/Mn for each of the microporous layer (X), microporous layer (Y), polyolefin (A), and polyolefin (B) is a polystyrene-converted molecular weight obtained by GPC (gel permeation chromatography) measurement.

The lower limit of the density of the polyolefin (A) is preferably 0.85 g/cm$^3$ or more, 0.88 g/cm$^3$ or more, 0.89 g/cm$^3$ or more, or 0.90 g/cm$^3$ or more. The upper limit of the density of the polyolefin (A) is preferably 1.1 g/cm$^3$ or less, 1.0 g/cm$^3$ or less, 0.98 g/cm$^3$ or less, 0.97 g/cm$^3$ or less, 0.96 g/cm$^3$ or less, 0.95 g/cm$^3$ or less, 0.94 g/cm$^3$ or less, 0.93 g/cm$^3$ or less, or 0.92 g/cm$^3$ or less. The density of the polyolefin (A) is associated with the crystallinity of the polyolefin (A). By having the density of the polyolefin (A) at 0.85 g/cm$^3$ or more, the pore-opening characteristic of the microporous layer (X) is improved, and is particularly advantageous in a method of porosifying a resin starting cloth by a dry process (hereinafter referred to as a dry method).

<Melt tension of microporous layer (X)>

The upper limit value of melt tension (melt tension of a single layer) of the microporous layer (X) when measured at a temperature of 230 °C, from the viewpoint of moldability of the microporous layer (X), is preferably 40 mN or less, 38 mN or less, 35 mN or less, 30 mN or less, or 25 mN or less. The lower limit value of melt tension (melt tension of a single layer) of the microporous layer (X), from the viewpoint of strength of the microporous layer (X), is preferably 10 mN or more, 15 mN or more, 16 mN or more, 17 mN or more, 20 mN or more, or 24 mN or more.

When the polyolefin (A) comprises polypropylene or is polypropylene, the upper limit value of melt tension of the polypropylene when measured at a temperature of 230 °C, from the viewpoint of moldability of the microporous layer (X), is preferably 30 mN or less or 25 mN or less. The lower limit value of melt tension of the polypropylene, from the viewpoint of strength of the microporous layer (X), is preferably 10 mN or more, 15 mN or more, or 20 mN or more.

<Melt flow rate (MFR) of microporous layer (X)>

The upper limit value of melt flow rate (MFR) (specifically, MFR of a single layer) of the microporous layer (X) or the constituent polyolefin (A) when measured at a load of 2.16 kg and a temperature of 230 °C, from the viewpoint of obtaining a separator having high strength, may be 0.9 g/10 min or less in one aspect, for example, 0.85 g/10 min or less, 0.7 g/10 min or less, 0.65 g/10 min or less, 0.6 g/10 min or less, 0.55 g/10 min or less, or 0.5 g/10 min or less. The lower limit value of MFR (MFR of a single layer) of the microporous layer (X) or the polyolefin (A), from the viewpoint of moldability of the microporous layer (X), may be, for example, 0.15 g/10 min or more, 0.2 g/10 min or more, 0.25 g/10 min or more, 0.3 g/10 min or more, 0.35 g/10 min or more, 0.38 g/10 min or more, 0.4 g/10 min or more, 0.45 g/10 min or more, 0.50 g/10 min or more, 0.55 g/10 min or more, 0.60 g/10 min or more, 0.65 g/10 min or more, or 0.70 g/10 min or more.

Due to the high molecular weight of the polyolefin (A) contained in the microporous layer (X), the MFR of the microporous layer (X) tends to be 0.9 g/10 min or less. By having a high molecular weight for the polyolefin, the number of tie molecules that bind crystals together increases, and thus a microporous layer having high strength is likely to be obtained. In one aspect, it is advantageous for the polyolefin (A) to have a molecular weight distribution represented by Mw/Mn of 7 or less and an MFR of 0.9 g/10 min or less, particularly 0.6 g/10 min or less, from the viewpoint of obtaining a high-strength, thin-film electricity storage device separator. In one aspect, by having the MFR of the microporous layer (X) at 0.15 g/10 min or more, the melt tension of the microporous layer (X) does not increase excessively, and a high-strength, high-output thin-film electricity storage device separator is more easily obtained.

When the polyolefin (A) comprises polypropylene or is polypropylene, the upper limit value of MFR of the polypropylene when measured at a load of 2.16 kg and a temperature of 230 °C, from the viewpoint of obtaining a separator having high strength, is preferably 0.9 g/10 min or less, 0.85 g/10 min or less, 0.8 g/10 min or less, 0.7 g/10 min or less, 0.65 g/10 min or less, 0.6 g/10 min or less, 0.55 g/10 min or less, or 0.5 g/10 min or less. The lower limit value of MFR of the polypropylene, from the viewpoint of moldability of the microporous layer (X), is preferably 0.2 g/10 min or more, 0.25 g/10 min or more, 0.3 g/10 min or more, 0.35 g/10 min or more, 0.4 g/10 min or more, 0.45 g/10 min or more, or 0.5 g/10 min or more.

<Molecular weight of microporous layer (X)>

The lower limit of weight average molecular weight (Mw) of the microporous layer (X), from the viewpoint of strength of the microporous layer (X) and the viewpoint of MFR of the microporous layer (X), is preferably 500,000 or greater, and more preferably 700,000 or greater. The upper limit of Mw of the microporous layer (X), from the viewpoint of increasing pore diameter in the microporous layer (X) and suppressing clogging to obtain a high output, is preferably 1,500,000 or less, and more preferably 1,100,000 or less.

The upper limit of the value (Mw/Mn) obtained by dividing the Mw of the microporous layer (X) by the number average molecular weight (Mn), from the viewpoint of strength of the microporous layer (X), the viewpoint of keeping melt tension low to make the microporous layer (X) thin, and the viewpoint of increasing pore diameter of the microporous layer (X) and suppressing clogging to obtain a high output, is preferably 6 or less, 5.5 or less, or 5 or less. The lower limit of Mw/Mn of the microporous layer (X), from the viewpoint of stability of the microporous layer (X), is preferably 1 or greater, 1.3 or greater, 1.5 or greater, 2.0 or greater, or 2.5 or greater.

<Pentad fraction>

When the polyolefin (A) comprises polypropylene or is polypropylene, in the present embodiment, the lower limit value of pentad fraction of the polypropylene measured by $^{13}$C-NMR (nuclear magnetic resonance), from the viewpoint of obtaining a microporous layer (X) having a low air permeability, is preferably 94.0% or greater, 95.0% or greater, 96.0% or greater, 96.5% or greater, 97.0% or greater, 97.5% or greater, 98.0% or greater, 98.5% or greater, or 99.0% or greater. The upper limit value of pentad fraction of the polypropylene may be, for example, 99.9% or less, 99.8% or less, or 99.5% or less.

When the pentad fraction of the polypropylene is 94.0% or greater, the crystallinity of the polypropylene increases. Since separators obtained by a stretch porosification method, particularly a dry method, are porosified by stretching the non-crystalline portions between a plurality of crystalline portions, it is preferable that the crystallinity of the polypropylene be high so that the pore-opening characteristic is satisfactory, the porosity and the number of pores present in the microporous layer (X) in an MD-TD surface observation or an ND-MD cross-section observation by a scanning electron microscope (SEM) can be increased, clogging can be suppressed, and air permeability can be kept low. When a polypropylene having a high molecular weight is used, strength is increased, but pore-opening characteristic deteriorates due to increased entanglement among molecular chains. As a result, low air permeability is difficult to obtain. This is considered to be one of the major factors that make using a high-molecular-weight polypropylene in a dry method difficult. However, by using a polypropylene with a very well-controlled structure, such as a polypropylene with a high pentad fraction, high pore-opening characteristic can be obtained even when a polypropylene having a high molecular weight is used. More preferably, by using polypropylene with such a controlled structure and applying controlled manufacturing conditions to the manufacturing process, higher pore-opening characteristic can be obtained even when a polypropylene having a high molecular weight is used.

<Average long pore diameter and maximum long pore diameter of microporous layer (X)>

In the electricity storage device separator of the present embodiment, in the case of MD-TD surface observation by a scanning electron microscope (SEM), the average long pore diameter of pores present in the microporous layer (X) is preferably 100 nm or more and/or 400 nm or less. In the present disclosure, machine direction (MD) indicates the film-forming direction of the microporous layer, and width direction (TD) indicates the direction perpendicular to the microporous layer, and normal direction (ND) indicates the thickness direction (specifically, a direction perpendicular to the MD and the TD) of the microporous layer. The MD of the separator comprising the microporous layer is the longitudinal direction in the case of a roll. Setting the average long pore diameter of pores present on this MD-TD surface within this range tends to contribute to the suppression of clogging within an electricity storage device such as a lithium-ion secondary cell and the control of air permeability of the separator.

In an MD-TD surface observation by SEM, the lower limit of the average long pore diameter of pores present in the microporous layer (X), from the viewpoint of clogging suppression within an electricity storage device, is preferably 100 nm or more, more preferably 130 nm or more, and even more preferably 140 nm or more. In an MD-TD surface observation by SEM, the upper limit of the average long pore diameter of pores present in the microporous layer (X), from the viewpoint of short-circuit suppression within an electricity storage device, is preferably 400 nm or less, more preferably 350 nm or less, and even more preferably 300 nm or less.

In an ND-MD cross-section observation by SEM, the lower limit of the long pore diameter of pores present in the microporous layer (X), from the viewpoint of clogging suppression within an electricity storage device, is preferably 100 nm or more, more preferably 130 nm or more, and even more preferably 140 nm or more. In an ND-MD cross-section observation by SEM, the upper limit of the long pore diameter of pores present in the microporous layer (X), from the viewpoint of short-circuit suppression within an electricity storage device, is preferably 400 nm or less, more preferably 350 nm or less, and even more preferably 300 nm or less.

In an MD-TD surface observation or an ND-MD cross-section observation by SEM, the lower limit of the maximum long pore diameter of pores present in the microporous layer (X), from the viewpoint of clogging suppression within an electricity storage device, is preferably 100 nm or more, more preferably 150 nm or more, more preferably 200 nm or more, more preferably 220 nm or more, and even more preferably 230 nm or more. In an MD-TD surface observation or an ND-MD cross-section observation by SEM, the upper limit of the maximum long pore diameter of pores present in the microporous layer (X), from the viewpoint of short-circuit suppression within an electricity storage device, is preferably 400 nm or less, more preferably 375 nm or less, even more preferably 360 nm or less, and particularly preferably 350 nm or less.

In the present disclosure, the average long pore diameter is the area average value of the long diameter calculated based on the area of each pore present in the microporous layer in an MD-TD surface observation or an ND-MD cross-section observation of the microporous layer by SEM. The maximum long pore diameter is the largest of the long diameters of the pores present in the microporous layer in an MD-TD surface observation or an ND-MD cross-section observation of the microporous layer by SEM. The average long pore diameter and maximum long pore diameter are observed by SEM (scanning electron microscope) in the MD-TD surface (when determining the average long pore diameter of pores present in the MD-TD surface) or the ND-MD cross-section (when determining the average long pore diameter of pores present in the ND-MD cross-section) of the separator. The resulting SEM images can be measured by image analysis in the range of 4 $\mu$m $\times$ 4 $\mu$m. Detailed conditions are indicated in the Examples.

In the MD-TD surface observation or the ND-MD cross-section observation of the microporous layer by SEM, as the average long pore diameter and maximum long pore diameter of the microporous layer increase, air permeability of the separator decreases, and clogging within an electricity storage device is reduced, which is expected to improve the longevity of electricity storage devices such as lithium-ion cells. If the average long pore diameter and maximum long pore diameter of the microporous layer (X) are excessively large, strength and insulating property of the separator comprising the microporous layer (X) decrease, and there is a concern that safety of the electricity storage device is reduced.

<Compatibility of MFR and average long pore diameter in microporous layer (X)>

In the electricity storage device separator of the present embodiment, the microporous layer (X) preferably has an MFR of 0.90 g/10 min or less and an average long pore diameter of 100 nm or more in the MD-TD surface or ND-MD cross-section in the case of a surface or cross-sectional SEM observation. Conventionally, since a separator having a multilayer structure, particularly a multilayer separator obtained by a dry method, does not use a plasticizer at the time of manufacturing, the MFR is as low as 0.90 g/10 min or less, and increasing the average long pore diameter in the MD-TD surface or ND-MD cross-section to 100 nm or more has been very difficult. When the MFR is as low as 0.90 g/10 min or less, i.e., when the molecular weight of the polyolefin is high, opening pores during stretch porosification is difficult. Even when pores are opened, the average long pore diameter tends to be small. Further, in a conventional technique in which the air permeability is adjusted to about 200 s/100 cm$^3$ as described above, if the average long pore diameter of the separator is small, suppressing clogging in an electricity storage device tends to be difficult. Furthermore, the film thickness of each layer for the multilayer separator needs to be particularly thin. For example, in the case of a three-layer separator having a thickness of 18 $\mu$m, when the thickness ratio of the layers is 1:1:1, the thickness of each layer needs to be 6 $\mu$m. Achieving large pore diameters in such thin films while using a polyolefin having a high molecular weight has been even more difficult. In the present embodiment, the average long pore diameter in an MD-TD surface observation or an ND-MD cross-section observation of the microporous layer (X) by SEM can be controlled to the above range by, but not limited to, applying precisely controlled film formation and stretching conditions as exemplified in the section <<Method for manufacturing electricity storage device separator>> described below and/or using a polypropylene having a controlled pentad fraction as the polyolefin, even in a microporous layer (X) mainly composed of a polyolefin having a low MFR (i.e., high molecular weight).

<Porosity of microporous layer (X)>

The lower limit of the porosity of the microporous layer (X) according to the present embodiment, from the viewpoint of suppressing clogging within an electricity storage device and the viewpoint of controlling air permeability of the separator, is preferably 20% or greater, more preferably 25% or greater, even more preferably 30% or greater, still more preferably 35% or greater, and particularly preferably 40% or greater. The upper limit of air permeability of the microporous layer (X), from the viewpoint of strength retention of the separator, is preferably 70% or less, more preferably 65% or less, even more preferably 60% or less, and particularly preferably 55% or less. The porosity is measured by a method described in the Examples.

<Thickness of microporous layer (X)>

The upper limit value of thickness of the microporous layer (X) according to the present embodiment, from the viewpoint of high energy densification of an electricity storage device, is preferably 10 $\mu$m or less, 8 $\mu$m or less, 7 $\mu$m or less, 6 $\mu$m or less, 5 $\mu$m or less, 4.5 $\mu$m or less, or 4 $\mu$m or less. The lower limit value of thickness of the microporous layer (X), from the viewpoint of strength, is preferably 1 $\mu$m or more, 2 $\mu$m or more, 3 $\mu$m or more, or 3.5 $\mu$m or more.

< Additive >

In the present embodiment, the microporous layer (X) mainly composed of the polyolefin (A) may further contain additives such as elastomers, flow modifiers (for example, fluorine-based flow modifiers), waxes, crystal nucleating agents, antioxidants, metallic soaps such as aliphatic carboxylic acid metal salts, ultraviolet absorbers, photo stabilizers, antistatic agents, antifogging agents, coloring pigments, and fillers, in addition to the polyolefin (A), as needed.

<Microporous layer (Y)>

The electricity storage device separator of the present embodiment may include a microporous layer (Y) mainly composed of a polyolefin (B). The electricity storage device separator of the present embodiment may include only one layer of the microporous layer (Y) or two or more layers thereof. In the present embodiment, being mainly composed of the polyolefin (B) refers to comprising 50% by mass or greater of the polyolefin (B) based on the total mass of the microporous layer (Y). The lower limit of the content of the polyolefin (B) in the microporous layer (Y), from the viewpoints of separator wettability with an electrolytic solution, film thinning, and shutdown characteristics, is preferably 55% by mass or greater, 60% by mass or greater, 70% by mass or greater, 80% by mass or greater, 90% by mass or greater, or 95% by mass or greater. The upper limit of the content of the polyolefin (B) in the microporous layer (Y) may be, for example, 60% by mass or less, 70% by mass or less, 80% by mass or less, 90% by mass or less, 95% by mass or less, 98% by mass or less, or 99% by mass or less, or may be 100% by mass.

<Polyolefin (B)>

The polyolefin (B) of the present embodiment is a polymer which comprises a monomer having a carbon-carbon double bond as a repeating unit and differs in molecular structure (more specifically, at least one of chemical composition, molecular weight, and crystal structure) from the polyolefin (A) of the present embodiment. Examples of the monomer constituting the polyolefin (B) include, but are not limited to, monomers having a carbon-carbon double bond and 1 or more and 10 or less carbon atoms, such as ethylene, propylene, 1-butene, 4-methyl-1-pentene, 1-hexene, and 1-octene. The polyolefin (B) is, for example, a homopolymer, a copolymer, or a multistage polymer, and is preferably a homopolymer.

It is preferable that the polyolefin (B), specifically from the viewpoint of shutdown characteristics, be polyethylene, polypropylene, a copolymer of ethylene and propylene, or a mixture thereof. It is more preferable that the polyolefin (B) comprise polyethylene or be polyethylene.

When polyethylene is used as the polyolefin (B), the lower limit of MFR of the polyethylene measured at a load of 2.16 kg and a temperature of 190 °C, from the viewpoints of satisfactory pore-opening characteristic and clogging suppression, is preferably 0.1 g/10 min or more, more preferably 0.15 g/10 min or more, even more preferably 0.18 g/10 min or more, and particularly preferably 0.2 g/10 min or more. The upper limit of MFR of the polyethylene, from the viewpoint of strength of the separator, is preferably 2.0 g/10 min or less, more preferably 1.0 g/10 min or less, even more preferably 0.8 g/10 min or less, and particularly preferably 0.5 g/10 min or less.

<Average long pore diameter of microporous layer (Y)>

In the present embodiment, in the case of an ND-MD cross-section observation by SEM, the lower limit of the average long pore diameter of pores present in the microporous layer (Y), from the viewpoints of clogging suppression and low air permeability of the separator, is preferably 100 nm or more, more preferably 150 nm or more, and even more preferably 200 nm or more. In an ND-MD cross-section observation by SEM, the upper limit of the average long pore diameter of pores present in the microporous layer (Y), from the viewpoint of short-circuit suppression within an electricity storage device such as a lithium-ion cell, is preferably 2000 nm or less, and more preferably 1000 nm or less.

In an ND-MD cross-section observation by SEM, the average long pore diameter of pores present in the microporous layer (Y) is preferably larger than the average long pore diameter of pores present in the microporous layer (X). In this case, clogging can be more effectively suppressed. In a comparison between the average long pore diameters of microporous layer (X) and microporous layer (Y) in an ND-MD cross-section observation, when two or more microporous layers (X) and two or more microporous layers (Y) are present, the value obtained by arithmetically averaging the average long pore diameter of each of the two or more layers by the layer thickness of each layer may be used to specify the average long pore diameter of the microporous layer (X) or the average long pore diameter of the microporous layer (Y), whereby the average long pore diameters of the microporous layer (X) and the microporous layer (Y) in an ND-MD cross-section observation can be appropriately compared.

In an electricity storage device separator according to a preferred aspect,

the electricity storage device separator comprises a microporous layer (X) and a microporous layer (Y), wherein the microporous layer (X) has a melt flow rate (MFR) of 0.9 g/10 min or less at a load of 2.16 kg and a temperature of 230 °C, and

in an ND-MD cross-section observation of the microporous layer (X) and the microporous layer (Y) by a scanning electron microscope (SEM),

an average long pore diameter of pores present in the microporous layer (X) is 100 nm or more and 400 nm or less, and an average long pore diameter of pores present in the microporous layer (Y) is larger than the average long pore diameter of pores present in the microporous layer (X). As described above, when a polyolefin having a high molecular weight is used as a constituent material of the microporous layer, the pore diameter in the microporous layer decreases due to poor film-forming characteristic and poor pore-opening characteristic during stretching. When such a microporous layer is used as a separator for an electricity storage device such as a lithium-ion secondary cell, clogging due to deposits occurs easily. In a separator having a multilayer structure, since the total thickness of the separator is limited from the viewpoint of cell characteristics, it is desirable to make each layer thin. However, under the constraints of the total thickness and the thickness of each layer of the multilayer structure, the pore diameter of the microporous layer formed using a polyolefin having a high molecular weight further decreases, and clogging due to deposits tends to be remarkable. The electricity storage device separator having the above configuration is particularly advantageous from the viewpoint of high strength and the ability to suppress clogging within the electricity storage device.

<Average long pore diameter ratio of microporous layer (X) to microporous layer (Y)>

In the present embodiment, in the case of an ND-MD cross-section observation of the microporous layer (X) and the microporous layer (Y) by SEM, the average long pore diameter of pores present in the microporous layer (Y) is preferably larger than the average long pore diameter of pores present in the microporous layer (X), and is more preferably 1.2 times or greater and 10 times or less of an average long pore diameter of pores present in the microporous layer (X). Specifically, it is advantageous to make the average long pore diameter of pores present in the ND-MD cross-section of the microporous layer (Y) larger than the average long pore diameter of pores present in the ND-MD cross-section of the microporous layer (X) within a specific range. In the ND-MD cross-section observation by SEM, by providing a separator with a microporous layer (Y) having an average long pore diameter that is larger than an average long pore diameter of pores present in a microporous layer (X), particularly 1.2 times or greater of the average long pore diameter of pores present in the microporous layer (X), clogging can be effectively suppressed. From the viewpoint of suppressing short-circuiting within an electricity storage device, in the ND-MD cross-section observation by SEM, it is preferable that the average long pore diameter of pores present in the microporous layer (Y) be 10 times or less of the average long pore diameter of pores present in the microporous layer (X). In the ND-MD cross-section observation by SEM, the ratio of the average long pore diameter of pores present in the microporous layer (Y) to the average long pore diameter of pores present in the microporous layer (X) is more preferably 1.4 or greater and more preferably 8 or less.

<Thickness of microporous layer (Y)>

The upper limit value of thickness of the microporous layer (Y), from the viewpoint of high energy densification of an electricity storage device, is preferably 10 $\mu$m or less, 8 $\mu$m or less, 7 $\mu$m or less, 6 $\mu$m or less, 5 $\mu$m or less, 4.5 $\mu$m or less, or 4 $\mu$m or less. The lower limit value of thickness of microporous layer (Y), from the viewpoint of strength, is preferably 1 $\mu$m or more, 2 $\mu$m or more, 3 $\mu$m or more, or 3.5 $\mu$m or more.

<Multilayer structure>

The electricity storage device separator may be single-layer or multilayer. In one aspect, the electricity storage device separator may be a single layer or multiple layers of the microporous layer (X) mainly composed of the polyolefin (A) described above, or may include a multilayer structure in which one or more layers of the microporous layer (X) and one or more layers of the microporous layer (Y) mainly composed of the polyolefin (B) are laminated. The additional microporous layer (Y) mainly composed of the polyolefin (B), in one aspect, may be a polyethylene microporous layer having the characteristics (for example, one or more of the specific melt flow rate (MFR) and the molecular weight distribution (Mw/Mn)) described above for the microporous layer (X), or in another aspect, may be a polyethylene microporous layer not having these characteristics. Further, the microporous layer (Y) may be a polypropylene microporous layer. Since polyethylene has a melting point suitable for melt shutdown, it is preferable that the microporous layer (Y) be mainly composed of polyethylene, from the viewpoint of shutdown characteristics.

A multilayer structure means a structure having two or more layers comprising the microporous layer (X) mainly composed of the polyolefin (A) of the present embodiment. Examples of a layer configuration can preferably include a two-layer structure of microporous layer (X)/microporous layer (Y), a three-layer structure of microporous layer (X)/microporous layer (Y)/microporous layer (X), and a three-layer structure of microporous layer (Y)/microporous layer (X)/microporous layer (Y). The electricity storage device separator may include a layer in addition to the microporous layer (X) and the microporous layer (Y). Examples of a layer in addition to the microporous layer (X) and the microporous layer (Y) can include a layer comprising an inorganic substance and a layer comprising a heat-resistant resin.

In one aspect, a multilayer structure in which three or more microporous layers are laminated is preferable. It is more preferable that the multilayer structure include at least two layers of the microporous layer (X) mainly composed of the polyolefin (A) of the present embodiment and at least one layer of the microporous layer (Y) mainly composed of the microporous layer (Y). It is even more preferable that the multilayer structure include at least two layers of the microporous layer (X) (PP microporous layer) mainly composed of polypropylene and at least one layer of the microporous layer (Y) (PE microporous layer) mainly composed of polyethylene.

The multilayer structure can exhibit the advantages of the present embodiment when laminated in any order, but it is particularly preferable therefor to have a three-layer structure laminated in the order of PP microporous layer/PE microporous layer/PP microporous layer. By having a three-layer structure of PP microporous layer/PE microporous layer/PP microporous layer, satisfactory mechanical strength can be maintained by the PP microporous layers while satisfactory shutdown characteristics can be provided by the PE microporous layer. The PP microporous layer is preferably the microporous layer (X) having the specific melt flow rate (MFR) described above.

<Thickness of separator>

The upper limit value of thickness of the electricity storage device separator according to the present embodiment, from the viewpoint of high energy densification of an electricity storage device, is preferably 25 $\mu$m or less, 22 $\mu$m or less, 20 $\mu$m or less, 18 $\mu$m or less, 17 $\mu$m or less, 16.5 $\mu$m or less, 16 $\mu$m or less, 15.5 $\mu$m or less, 15 $\mu$m or less, 14.5 $\mu$m or less, 14 $\mu$m or less, or 12 $\mu$m or less. The lower limit value of thickness of the electricity storage device separator according to the present embodiment, from the viewpoint of strength, is preferably 6 $\mu$m or more, 7 $\mu$m or more, 8 $\mu$m or more, 9 $\mu$m or more, 10 $\mu$m or more, or 11 $\mu$m or more.

<Porosity of separator>

The lower limit of porosity of the electricity storage device separator, from the viewpoint of suppressing clogging within an electricity storage device and the viewpoint of controlling air permeability of the separator, is preferably 20% or greater, more preferably 25% or greater, even more preferably 30% or greater, and particularly preferably 35% or greater. The upper limit of porosity of the electricity storage device separator, from the viewpoint of strength retention of the separator, is preferably 70% or less, more preferably 65% or less, even more preferably 60% or less, and particularly preferably 55% or less. The porosity is measured by a method described in the Examples.

<Air permeability (air permeability resistance) of separator>

The upper limit value of air permeability of the electricity storage device separator, when the thickness of the electricity storage device separator is converted to 14 $\mu$m, is preferably 300 s/100 cm$^3$ or less, 290 s/100 cm$^3$ or less, 280 s/100 cm$^3$ or less, 270 s/100 cm$^3$ or less, 250 s/100 cm$^3$ or less, 180 s/100 cm$^3$ or less, 170 s/100 cm$^3$ or less, 160 s/100 cm$^3$ or less, 150 s/100 cm$^3$ or less, or 140 s/100 cm$^3$ or less. The lower limit value of air permeability of the electricity storage device separator, when the thickness of the electricity storage device separator is converted to 14 $\mu$m, may be, for example, 50 s/100 cm$^3$ or more, 60 s/100 cm$^3$ or more, 70 s/100 cm$^3$ or more, 100 s/100 cm$^3$ or more, 110 s/100 cm$^3$ or more, or 120 s/100 cm$^3$ or more.

The upper limit value of air permeability of the electricity storage device separator, when the thickness of the electricity storage device separator is converted to 16 $\mu$m, is preferably 250 s/100 cm$^3$ or less, 240 s/100 cm$^3$ or less, 230 s/100 cm$^3$ or less, 200 s/100 cm$^3$ or less, or 180 s/100 cm$^3$ or less. The lower limit value of air permeability of the electricity storage device separator, when the thickness of the electricity storage device separator is converted to 16 $\mu$m, may be, for example, 50 s/100 cm$^3$ or more, 60 s/100 cm$^3$ or more, or 70 s/100 cm$^3$ or more.

<Puncture strength>

The lower limit value of puncture strength of the electricity storage device separator, when the thickness of the electricity storage device separator is converted to 14 $\mu$m, is preferably 230 gf or more, 240 gf or more, 250 gf or more, 260 gf or more, 280 gf or more, 300 gf or more, 310 gf or more, 320 gf or more, 330 gf or more, 340 gf or more, 350 gf or more, or 360 gf or more. The upper limit value of puncture strength of the electricity storage device separator, when the thickness of the electricity storage device separator is converted to 14 $\mu$m, is preferably 550 gf or less, 500 gf or less, or 480 gf or less. In one particularly preferred aspect, the thickness of the electricity storage device separator is 8 $\mu$m or more and 18 $\mu$m or less, and the puncture strength described above is 230 gf or more.

The lower limit value of puncture strength of the electricity storage device separator, when the thickness of the electricity storage device separator is converted to 16 $\mu$m, is preferably 230 gf or more, 240 gf or more, 250 gf or more, 260 gf or more, 280 gf or more, 300 gf or more, or 320 gf or more. The upper limit of puncture strength of the electricity storage device separator, when the thickness of the electricity storage device separator is converted to 16 $\mu$m, is preferably 550 gf or less, 500 gf or less, or 480 gf or less.

<Balance of thickness, air permeability, and puncture strength>

As described above, for the electricity storage device separator of the present embodiment, a microporous layer mainly composed of a polyolefin having specific melt tension and melt flow rate (MFR) is used, whereby an electricity storage device separator having low air permeability and high strength, while being a thin film, can be obtained. It is more preferable that, for example, the electricity storage device separator of the present embodiment comprise a multilayer structure of microporous layers, wherein the multilayer structure has a thickness of 18 $\mu$m or less, an air permeability of 300 s/100 cm$^3$ or less when the thickness of the multilayer structure is converted to 14 $\mu$m, and a puncture strength of 300 gf or more when the thickness is converted to 14 $\mu$m. It is even more preferable that the thickness of the multilayer structure be 18 $\mu$m or less, the thickness (thickness as a single layer) of a microporous layer of the present embodiment contained in the multilayer structure be 6 $\mu$m or less, the air permeability when the thickness of the multilayer structure is converted to 14 $\mu$m be 300 s/100 cm$^3$ or less, and the puncture strength when the thickness is converted to 14 $\mu$m be 300 gf or more.

<Tensile test characteristics of separator>

In the tensile test of the electricity storage device separator according to the present embodiment, it is preferable that the ratio (SMD/STD) of tensile strength in machine direction (SMD) to tensile strength in width direction (STD) satisfy the following relation.

SMD/STD > 5

A separator having SMD/STD greater than 5 can be used as a high-strength separator. The high-strength separator more preferably has SMD/STD $\geq$ 7, even more preferably has SMD/STD $\geq$ 10, still more preferably has SMD/STD $\geq$ 12, and particularly preferably has SMD/STD $\geq$ 14. The upper limit of SMD/STD is not limited, but may be, for example, SMD/STD $\leq$ 20, from the viewpoint of ease of manufacture of the separator. The tensile test of the separator is carried out according to the method described in the Examples section.

<Heat shrinkage rate>

For the electricity storage device separator of the present embodiment, it is preferable that the heat shrinkage rate after heat treatment at 105 °C for 1 h be 1% or less in the TD and 4% or less in the MD, and that the heat shrinkage rate after heat treatment at 120 °C for 1 h be 1% or less in the TD and 10% or less in the MD. The heat shrinkage rate after heat treatment at 105 °C is an indicator of dimensional stability of the electricity storage device separator when the electricity storage device is used, particularly when placed in a severe high-temperature environment or when in a state of abnormal heating. The heat shrinkage rate after heat treatment at 120 °C is an indicator of dimensional stability of the electricity storage device separator when the electricity storage device is used, particularly under conditions where the electricity storage device is in an abnormal state. In the electricity storage device separator of the present embodiment, after heat treatment at 105 °C for 1 h and heat treatment at 120 °C for 1 h, heat shrinkage rates in the TD and the MD are controlled within specific ranges, whereby dimensional stability inside an electricity storage device, such as a cell, at high temperatures can be ensured, abnormal states of the electricity storage device is suppressed, and satisfactory device characteristics can be ensured. Details of the method for measuring heat shrinkage rate in the present disclosure will be described in the Examples.

The heat shrinkage rate in the TD after heat treatment at 105 °C for 1 h, from the viewpoint of dimensional stability within an electricity storage device, is 1% or less in one aspect, and is preferably 0.9% or less, and more preferably 0.8% or less. The heat shrinkage rate in the TD is preferably as low as possible, but may be, for example, -1% or greater, -0.5% or greater, or 0% or greater, from the viewpoint of ease of manufacture of the electricity storage device separator. The heat shrinkage rate in the MD after heat treatment at 105 °C for 1 h, from the viewpoint of dimensional stability within an electricity storage device, is 4% or less in one aspect, and is preferably 3.8% or less, more preferably 3.5% or less, even more preferably 3.2% or less, particularly preferably 3% or less, and most preferably 2.7% or less. The heat shrinkage rate in the MD is preferably as low as possible, but may be, for example, 0% or greater, 0.5% or greater, or 1% or greater, from the viewpoint of ease of manufacture of the electricity storage device separator.

The heat shrinkage rate in the TD after heat treatment at 120 °C for 1 h, from the viewpoint of dimensional stability within an electricity storage device, is 1% or less in one aspect, and is preferably 0.9% or less, and more preferably 0.8% or less. The heat shrinkage rate in the TD is preferably as low as possible, but may be, for example, -1% or greater, -0.5% or greater, or 0% or greater, from the viewpoint of ease of manufacture of the electricity storage device separator. The heat shrinkage rate in the MD after heat treatment at 120 °C for 1 h, from the viewpoint of dimensional stability within an electricity storage device, is 10% or less in one aspect, and is preferably 9.0% or less, more preferably 8.5% or less, even more preferably 8.0% or less, particularly preferably 7.5% or less, and most preferably 7.0% or less. The heat shrinkage rate in the MD is preferably as low as possible, but may be, for example, 0% or greater, 0.5% or greater, or 1% or greater, from the viewpoint of ease of manufacture of the electricity storage device separator.

<Balance of air permeability, puncture strength, and heat shrinkage rate>

The electricity storage device separator of the present embodiment uses a microporous layer (X) mainly composed of a polyolefin (A) having a specific melt flow rate (MFR), and has a low air permeability, high strength, and a low heat shrinkage rate. Generally, since a polyolefin having a low MFR, i.e., a high molecular weight has a large degree of entanglement among polymers, a separator using the polyolefin does not have sufficient pore-opening characteristic. As a result, keeping air permeability low is difficult. In conventional separators, polyolefins having a sufficiently high molecular weight cannot be used, which leads to insufficient puncture strength, or when a polyolefin having a high molecular weight is used, pore-opening characteristic is insufficient, which makes achieving low air permeability and large pore diameter difficult. Thus, low air permeability and high strength (particularly, high puncture strength) conventionally had a conflicting relationship. Further, conventional dry separators tend to have a high shrinkage rate in the MD, which makes obtaining a separator that satisfies all three requirements of high strength, low air permeability, and low heat shrinkage rate very difficult. By using a specific polyolefin (A) in the microporous layer (X), the electricity storage device separator of the present embodiment can have a combination of low air permeability, high puncture strength, and low heat shrinkage rate. Such an electricity storage device separator can be manufactured by, for example, but not limited to, applying precisely controlled film formation and stretching conditions as exemplified in the section <<Method for manufacturing electricity storage device separator> > described below and/or using a polypropylene having a controlled pentad fraction as the polyolefin (A).

(2) Second aspect

<Microporous layer>

The electricity storage device separator according to the second aspect comprises a microporous layer comprising a polyolefin. The microporous layer is preferably mainly composed of a polyolefin. In the present embodiment, the microporous layer may be used as a single layer or used as a multilayer by laminating two or more layers. The microporous layer mainly composed of a polyolefin refers to a film comprising 50% by mass or greater of a polyolefin based on the total mass of the microporous layer. The lower limit of the content of the polyolefin in the microporous layer, from the viewpoints of wettability of the film with an electrolytic solution, film thinning, and shutdown characteristics, is preferably 55% by mass or greater, 60% by mass or greater, 70% by mass or greater, 80% by mass or greater, 90% by mass or greater, or 95% by mass or greater. The upper limit of the content of the polyolefin in the microporous layer may be, for example, 60% by mass or less, 70% by mass or less, 80% by mass or less, 90% by mass or less, 95% by mass or less, 98% by mass or less, or 99% by mass or less, or may be 100% by mass.

<Polyolefin>

The polyolefin is a polymer comprising a monomer having a carbon-carbon double bond as a repeating unit. Examples of the monomer constituting the polyolefin include, but are not limited to, monomers having a carbon-carbon double bond and 1 or more and 10 or less carbon atoms, such as ethylene, propylene, 1-butene, 4-methyl-1-pentene, 1-hexene, and 1-octene. The polyolefin is, for example, a homopolymer, a copolymer, or a multistage polymer, and is preferably a homopolymer.
It is preferable that the polyolefin, specifically from the viewpoint of shutdown characteristics, be polyethylene, polypropylene, a copolymer of ethylene and propylene, or a mixture thereof. It is more preferably that the polyolefin (A) comprise polypropylene or be polypropylene.
It is preferable that the polyolefin of the present embodiment be mainly composed of polypropylene. The polyolefin being mainly composed of polypropylene refers to comprising 50% by mass or greater of polypropylene based on the total mass of the polyolefin. The lower limit of the content of the polypropylene in the polyolefin, from the viewpoint of obtaining satisfactory shutdown characteristics, is preferably 55% by mass or greater, 60% by mass or greater, 70% by mass or greater, 80% by mass or greater, 90% by mass or greater, or 95% by mass or greater. The upper limit of the content of the polypropylene in the polyolefin may be 100% by mass, or may be 99% by mass or less or 98% by mass or less.
Examples of tacticity of the polypropylene include, but are not limited to, atacticity, isotacticity, and syndiotacticity. The polypropylene according to the present embodiment is preferably an isotactic or syndiotactic homopolymer having high crystallinity.
The polypropylene is preferably a homopolymer, and may be a copolymer, such as a block polymer, obtained by copolymerizing a small amount of a comonomer other than propylene, such as an α-olefin comonomer. The amount of propylene structure included as a repeating unit in the polypropylene may be, for example, 70 mol% or greater, 80 mol% or greater, 90 mol% or greater, 95 mol% or greater, or 99 mol% or greater. The amount of repeating units from a comonomer having a structure other than the propylene structure may be, for example, 30 mol% or less, 20 mol% or less, 10 mol% or less, 5 mol% or less, or 1 mol% or less. For the polypropylene, one type can be used alone, or two or more types can be mixed and used.
The weight average molecular weight (Mw) of the polyolefin, from the viewpoint of strength of the microporous layer, is preferably 100,000 or greater, more preferably 200,000 or greater, even more preferably 300,000 or greater, still more preferably 500,000 or greater, and particularly preferably 550,000 or greater, and is preferably 2,000,000 or less, and more preferably 1,500,000 or less.
The upper limit value of the value (Mw/Mn) obtained by dividing the weight average molecular weight (Mw) by the number average molecular weight (Mn) of the polyolefin is preferably 7 or less, 6.5 or less, 6 or less, 5.5 or less, or 5 or less. By having a small molecular weight distribution represented by Mw/Mn, entanglement among molecules is reduced, which decreases melt tension, and the effect of film thinning is obtained. Further, the Mw/Mn of the polyolefin is preferably 1 or greater, 1.3 or greater, 1.5 or greater, 2.0 or greater, or 2.5 or greater. By having Mw/Mn at 1 or greater, moderate molecular entanglement is maintained, and stability tends to be satisfactory during film formation.
When the polyolefin comprises polypropylene or is polypropylene, the weight average molecular weight (Mw) of the polypropylene, from the viewpoint of strength of the microporous layer, is preferably 100,000 or greater, more preferably 200,000 or greater, even more preferably 300,000 or greater, still more preferably 500,000 or greater, and particularly preferably 550,000 or greater, and is preferable 2,000,000 or less, and more preferably 1,500,000 or less.

The upper limit value of the value (Mw/Mn) obtained by dividing the weight average molecular weight (Mw) by the number average molecular weight (Mn) of the polypropylene is preferably 7 or less, 6.5 or less, 6 or less, 5.5 or less, or 5 or less. By having a small molecular weight distribution represented by Mw/Mn, entanglement among molecules is reduced, which decreases melt tension, and the effect of film thinning can be obtained. Further, the Mw/Mn is preferably 1 or greater, 1.3 or greater, 1.5 or greater, 2.0 or greater, or 2.5 or greater. By having Mw/Mn at 1 or greater, moderate molecular entanglement is maintained, and stability tends to be satisfactory during film formation.

The weight average molecular weight, number average molecular weight, and Mw/Mn of the polyolefin of the present embodiment are polystyrene-converted molecular weights obtained by GPC (gel permeation chromatography) measurement.

The density of the polyolefin is preferably 0.85 g/cm³ or more, 0.88 g/cm³ or more, 0.89 g/cm³ or more, or 0.90 g/cm³ or more. The density of the polyolefin is preferably 1.1 g/cm³ or less, 1.0 g/cm³ or less, 0.98 g/cm³ or less, 0.97 g/cm³ or less, 0.96 g/cm³ or less, 0.95 g/cm³ or less, 0.94 g/cm³ or less, 0.93 g/cm³ or less, or 0.92 g/cm³ or less. The density of the polyolefin is associated with the crystallinity of the polyolefin. When the density of the polyolefin is 0.85 g/cm³ or more, productivity of the microporous layer is improved, and is particularly advantageous in a method of porosifying a resin starting cloth by a dry process (hereinafter referred to as a dry method).

<Melt tension of microporous layer>

The upper limit value of melt tension (melt tension of a single layer) of the microporous layer when measured at a temperature of 230 °C, from the viewpoint of moldability of the microporous layer, is preferably 30 mN or less, and more preferably 25 mN or less. The lower limit value of melt tension (melt tension of a single layer) of the microporous layer, from the viewpoint of strength of the microporous layer, is preferably 10 mN or more, 15 mN or more, or 20 mN or more.

<Melt flow rate (MFR)>

The melt flow rate (MFR) (specifically, MFR of a single layer) when the microporous layer or the constituent polyolefin of the present embodiment is measured at a load of 2.16 kg and a temperature of 230 °C, from the viewpoint of obtaining a microporous layer having higher strength and higher safety, is 0.7 g/10 min or less in one aspect, and may be, for example, 0.6 g/10 min or less, 0.55 g/10 min or less, or 0.5 g/10 min or less. The lower limit value of MFR (MFR of a single layer) of the microporous layer or the constituent polyolefin, from the viewpoints of not excessively increasing melt tension of the microporous layer and obtaining high safety and satisfactory moldability of the thin-film microporous layer, may be, for example, 0.15 g/10 min or more, 0.2 g/10 min or more, 0.25 g/10 min or more, 0.3 g/10 min or more, 0.35 g/10 min or more, or 0.4 g/10 min or more.

When the separator is formed of multiple microporous layers, by attaching an adhesive tape to a separator edge and then pulling on the tape, each microporous layer can be easily peeled off and collected, and physical properties such as melt tension can be measured.

The MFR of the microporous layer or the constituent polyolefin being 0.7 g/10 min or less, particularly 0.6 g/10 min or less means that the molecular weight of the polyolefin contained in the microporous layer is high. By having a high molecular weight for the polyolefin, the number of tie molecules that bind crystals together increases, and thus a microporous layer having high strength is likely to be obtained. Further, due to the high molecular weight, the viscosity when melted increases, short-circuit temperature during the fuse short-circuit test increases, and high-temperature safety of a cell increases. In one aspect, it is particularly advantageous for the polyolefin to have a molecular weight distribution represented by Mw/Mn of 7 or less and an MFR of 0.7 g/10 min or less, particularly 0.6 g/10 min or less, from the viewpoint of obtaining a thin-film electricity storage device separator having high safety.

When the polyolefin comprises polypropylene or is polypropylene, it is preferable that the MFR of the polypropylene when measured at a load of 2.16 kg and a temperature of 230 °C be 0.2 g/10 min more and 0.7 g/10 min or less, from the viewpoint of obtaining a microporous layer having high safety and high strength. The upper limit value of MFR of the polypropylene, from the viewpoint of obtaining a microporous layer having higher strength, may be, for example, 0.6 g/10 min or less, 0.55 g/10 min or less, 0.5 g/10 min or less, 0.45 g/10 min or less, 0.4 g/10 min or less, or 0.35 g/10 min or less. The lower limit value of MFR of the polypropylene, from the viewpoint of moldability of the microporous layer, may be, for example, 0.25 g/10 min or more, 0.3 g/10 min or more, 0.35 g/10 min or more, 0.4 g/10 min or more, 0.45 g/10 min or more, or 0.5 g/10 min or more.

<Pentad fraction>

When the polyolefin comprises polypropylene or is polypropylene, in the present embodiment, the lower limit value of pentad fraction of the polypropylene measured by $^{13}$C-NMR (nuclear magnetic resonance), from the viewpoint of obtaining a microporous layer (X) having a low air permeability, may preferably be 95.0% or greater, 96.0% or greater, 96.5% or greater, 97.0% or greater, 97.5% or greater, 98.0% or greater, 98.5% or greater, or 99.0% or greater. The upper limit value of pentad fraction of the polypropylene may be, for example, 99.9% or less, 99.8% or less, or 99.5% or less.

When the pentad fraction of the polypropylene is 95.0% or greater, the crystallinity of the polypropylene increases. In the microporous layer obtained by a stretch porosification method, particularly a dry method, pores are opened by stretching the non-crystalline portions between a plurality of crystalline portions. Thus, it is preferable that the crystallinity of the polypropylene be high since the air permeability can be kept low.

<Additive>

In the present embodiment, the microporous layer comprising (preferably mainly composed of) a polyolefin may include one or a combination of two or more additives such as an elastomer, a fluorine-based flow modifier, a wax, a crystal nucleating agent, an antioxidant, a metallic soap such as an aliphatic carboxylic acid metal salt, an ultraviolet absorber, a photo stabilizer, an antistatic agent, an antifogging agent, and a coloring pigment, in addition to the polyolefin, as needed.

<Elastomer>

Examples of an elastomer include thermoplastic elastomers such as ethylene/$\alpha$-olefin copolymer, ethylene/styrene copolymer, propylene/$\alpha$-olefin copolymer, 1-butene/$\alpha$-olefin copolymer, a block copolymer of styrene and butadiene (SBS) and hydrogenated polymers thereof (SEBS), and a block copolymer of styrene and isoprene (SIS) and hydrogenated polymers thereof (SEPS). Examples of the $\alpha$-olefin include $\alpha$-olefins such as propylene, 1-butene, 1-hexene, 1-octene, and 4-methyl-1-pentene. High-molecular-weight polymers obtained by copolymerizing ethylene and an $\alpha$-olefin and high-molecular-weight polymers obtained by copolymerizing long chain branches, such as linear low-density polyethylene or ultra-low-density polyethylene, by chain transfer during polymerization are also included. These thermoplastic polymers may be used alone, or two or more thereof may be mixed and used.

<Fuse temperature and short-circuit temperature>

In one aspect, the short-circuit temperature of the electricity storage device separator measured by the fuse short-circuit test of the present disclosure (also referred to simply as a short-circuit temperature in the present disclosure) is controlled within a specific range. Further, in a preferred aspect, the fuse temperature of the electricity storage device separator measured by the fuse short-circuit test of the present disclosure (also referred to simply as a fuse temperature in the present disclosure) is controlled within a specific range.

The fuse short-circuit test of the present disclosure is carried out as follows. A separator sample is placed on a ceramic plate in which a thermocouple is embedded. While a surface pressure of 1.5 MPa is applied with a hydraulic press, the temperature of a heater is increased, and the temperature and resistance values are continuously measured using an alternating current electrical resistance measuring apparatus connected to the current collector portions of a positive electrode and a negative electrode. The temperature is increased from room temperature (23 °C in one aspect) to 220 °C at a rate of 15 °C/min, and the impedance (resistance value) is measured with a 1 kHz alternating current. According to such a fuse short-circuit test, the fuse short-circuit behavior within an electricity storage device can be reflected by using the positive electrode and the negative electrode and further applying a surface pressure. A value obtained by multiplying the obtained impedance ($\Omega$) by the effective positive electrode area is designated as the impedance ($\Omega \cdot cm^2$) per positive electrode unit area. The temperature at which the impedance per positive electrode unit area reaches 100 $\Omega \cdot cm^2$ is designated as the fuse temperature (°C). The temperature at which the impedance per positive electrode unit area falls below 100 $\Omega \cdot cm^2$ after the impedance reverses from an increase to a decrease (meaning that the separator has reached a pore-blocking state) is designated as the short-circuit temperature (°C).

The short-circuit temperature corresponds to a temperature at which an electricity storage device short-circuits due to abnormally high temperatures during use. Controlling the short-circuit temperature of the electricity storage device separator to a predetermined value or higher is advantageous in preventing short-circuiting of an electricity storage device under abnormally high temperatures. The lower limit of the short-circuit temperature, from the above viewpoint, is 200 °C or higher in one aspect, and is preferably 201 °C or higher, 202 °C or higher, 203 °C or higher, or 204 °C or higher. The upper limit of the short-circuit temperature, from the viewpoint of ease of manufacture of the separator, may be, for example, 250 °C or lower, 245 °C or lower, 230 °C or lower, or 225 °C or lower.

The fuse temperature corresponds to a temperature at which a separator deteriorates (for example, melts) and cuts off a current between electrodes due to abnormally high temperatures during use of an electricity storage device.

Controlling the fuse temperature of the electricity storage device separator to a predetermined value or lower is advantageous in realizing high safety by allowing the fuse to function satisfactorily under abnormally high temperatures in the electrical storage device. The upper limit of the fuse temperature, from the above viewpoint, is preferably 150 °C or lower, 145 °C or lower, 140 °C or lower, or 135 °C or lower. The lower limit of the fuse temperature, from the viewpoint of satisfactory strength of the separator, is preferably 105 °C or higher, 110 °C or higher, 115 °C or higher, or 120 °C or higher.

<Orientation ratio (wide-angle X-ray scattering)>

The ratio MD/TD of the orientation ratio in machine direction (MD) to the orientation ratio in width direction (TD) when the microporous layer of the present embodiment is measured by wide-angle X-ray scattering is given as the (110) crystal peak area ratio (MD/TD). The lower limit value of the above ratio (MD/TD) is preferably 1.3 or greater, 2 or greater, 2.5 or greater, 3 or greater, 3.5 or greater, 4 or greater, 4.5 or greater, or 5 or greater. The upper limit value of ratio (MD/TD) of the orientation ratios may be, for example, 12 or lower, 10 or lower, 8 or lower, 6 or lower, 5.5 or lower, 5 or lower, 4.5 or lower, or 4 or lower. Note that, in the present disclosure, "machine direction" or "MD" means the machine direction of microporous layer continuous molding, and "width direction" or "TD" means the direction crossing the MD at an angle of 90°.

The (110) crystal peak area ratio (MD/TD) of the microporous layer by wide-angle X-ray scattering being 1.3 or greater means that the polymer molecular chains constituting the microporous layer are strongly oriented in the MD. When the microporous layer is manufactured by a method in which the microporous layer is strongly MD-stretched, particularly in a dry MD-stretching method, the orientation ratio (MD/TD) tends to be 1.3 or greater. The advantage that the microporous layer of the present embodiment has high strength and can be thinned is not limited, but is remarkable when the microporous is manufactured by a dry MD-stretching method. Thus, it is preferable that the orientation ratio (MD/TD) of the microporous layer be 1.3 or greater.

<Multilayer structure>

The electricity storage device of the present embodiment may be configured as a single-layer or a multilayer microporous layer as long as at least one layer of the microporous layer comprising a polyolefin of the present embodiment is included. For example, a multilayer structure may comprise a polyolefin in all layers, or may comprise layers not comprising a polyolefin. The multilayer structure may have a microporous single layer comprising (preferably mainly composed of) a polyolefin of the present embodiment described above, or a multilayer structure in which the two or more microporous layers are laminated. For example, the multilayer structure may be a multilayer structure in which a microporous layer mainly composed of polypropylene and a microporous layer mainly composed of polyethylene are laminated. The microporous layer mainly composed of polyethylene may be a polyethylene microporous layer having the characteristics (for example, one or more of the specific melt flow rate (MFR) and molecular weight distribution (Mw/Mn)) described above regarding the microporous layer comprising a polyolefin, or may be a polyethylene microporous layer not having these characteristics. Since polyethylene has a melting point suitable for melt shutdown, it is preferable to include an additional microporous layer mainly composed of polyethylene, from the viewpoint of shutdown characteristics.

The MFR of the polyethylene measured at a load of 2.16 kg and a temperature of 190 °C, from the viewpoints of shutdown characteristics, satisfactory pore-opening characteristic, and clogging suppression, is preferably 0.1 g/10 min or more, more preferably 0.15 g/10 min or more, even more preferably 0.18 g/10 min or more, and particularly preferably 0.2 g/10 min or more, and from the viewpoint of strength of the separator, is preferably 2.0 g/10 min or less, more preferably 1.0 g/10 min or less, even more preferably 0.8 g/10 min or less, and particularly preferably 0.7 g/10 min or less.

A multilayer structure in which three or more microporous layers are laminated is preferable as the multilayer structure. It is more preferable that the multilayer structure include at least two microporous layers (A) mainly composed of a polyolefin of the present embodiment and whose constituent polymers are the same as each other, and at least one microporous layer (B) mainly composed of a polyolefin of the present embodiment that is different from the constituent polymer of the microporous layer (A). It is even more preferable that the multilayer structure include at least two microporous layers mainly composed of polypropylene (PP microporous layers) and at least one additional microporous layer mainly composed of polyethylene (PE microporous layer) of the present embodiment.

The multilayer structure can exhibit the advantages of the present embodiment when laminated in any order, but it is particularly preferable therefor to have a three-layer structure laminated in the order of PP microporous layer/PE microporous layer/PP microporous layer. By having a three-layer structure of PP microporous layer/PE microporous layer/PP microporous layer, satisfactory mechanical strength can be maintained by the PP microporous layers while satisfactory shutdown characteristics can be provided by the PE microporous layer. The PP microporous layer is the microporous layer of the present embodiment, having the specific melt tension and melt flow rate (MFR) described above for the microporous layer comprising a polyolefin. The intermediate PE microporous layer may be a polyethylene microporous layer having the specific melt tension and melt flow rate (MFR) described above, or a polyethylene microporous layer not having these characteristics.

<Thickness of microporous layer>

The upper limit value of thickness (thickness of a single layer) of the microporous layer in a multilayer structure of the present embodiment, contained in the electricity storage device separator of the present embodiment, from the viewpoint of high energy densification of an electricity storage device, is preferably 8 $\mu$m or less, 7.5 $\mu$m or less, 7 $\mu$m or less, 6.5 $\mu$m or less, 6 $\mu$m or less, 5.5 $\mu$m or less, or 5 $\mu$m or less. The lower limit value of thickness (thickness of a single layer) of the microporous layer of the present embodiment, from the viewpoint of strength, is preferably 1 $\mu$m or more, 2 $\mu$m or more, 3 $\mu$m or more, 3.5 $\mu$m or more, 4 $\mu$m or more, or 4.5 $\mu$m or more.

<Thickness of separator>

The upper limit value of thickness of the entire electricity storage device separator, which may be single-layer or multilayer, from the viewpoint of high energy densification of an electricity storage device, is preferably 18 $\mu$m or less, 17 $\mu$m or less, 16.5 $\mu$m or less, 16 $\mu$m or less, 15.5 $\mu$m or less, 15 $\mu$m or less, 14.5 $\mu$m or less, or 14 $\mu$m or less. The lower limit value of thickness of the entire separator, from the viewpoint of strength, is preferably 3 $\mu$m or more, 5 $\mu$m or more, 8 $\mu$m or more, 10 $\mu$m or more, 11 $\mu$m or more, 11.5 $\mu$m or more, 12 $\mu$m or more, 12.5 $\mu$m or more, or 13 $\mu$m or more.

<Porosity of separator>

The porosity of the electricity storage device separator, from the viewpoint of suppressing clogging within an electricity storage device and obtaining satisfactory air permeability of the separator, is preferably 20% or greater, more preferably 25% or greater, even more preferably 30% or greater, and particularly preferably 35% or greater, and from the viewpoint of strength retention of the separator, is preferably 70% or less, more preferably 65% or less, even more preferably 60% or less, and particularly preferably 55% or less. The porosity is measured by a method described in the Examples.

<Air permeability (air permeability resistance)>

The upper limit value of air permeability of the electricity storage device separator, when the thickness of the separator is converted to 14 $\mu$m, is preferably 300 s/100 cm$^3$ or less, 290 s/100 cm$^3$ or less, 280 s/100 cm$^3$ or less, 270 s/100 cm$^3$ or less, or 260 s/100 cm$^3$ or less. The lower limit value of air permeability of the electricity storage device separator, when the thickness of the separator is converted to 14 $\mu$m, may be, for example, 100 s/100 cm$^3$ or more, 110 s/100 cm$^3$ or more, or 120 s/100 cm$^3$ or more.

<Heat shrinkage rate>

The upper limit value of MD heat shrinkage rate when the electricity storage device separator of the present embodiment is heat-treated at 105 °C for 1 h, from the viewpoint of safety of an electricity storage device at high temperatures, is 4% or less, and is preferably 3.5% or less, 3% or less, or 2.5% or less. When the MD heat shrinkage rate is greater than 4%, the separator inside the electricity storage device at high temperatures shrinks, and the risk of deformation of the laminated electrode body and wound electrode body or short-circuiting increases. The lower limit value of MD heat shrinkage rate, from the viewpoint of ease of manufacture of the electricity storage device separator, may be, for example, 0% or greater, 0.5% or greater, or 1% or greater.

The upper limit value of TD heat shrinkage rate when the electricity storage device separator of the present application is heat-treated at 105 °C for 1 h, from the viewpoint of safety of an electricity storage device at high temperatures, is 1% or less, and is preferably 0.9% or less and more preferably 0.8% or less. The heat shrinkage rate in the TD is preferably as low as possible, but may be, for example, -1% or greater, -0.5% or greater, or 0% or greater, from the viewpoint of ease of manufacture of the electricity storage device separator.

<Puncture strength>

The lower limit value of puncture strength of the electricity storage device separator, when the thickness is converted to 14 $\mu$m, is preferably 300 gf or more, 310 gf or more, 320 gf or more, 330 gf or more, 340 gf or more, 350 gf or more, or 360 gf or more. The upper limit value of puncture strength of the electricity storage device separator, when the thickness is converted to 14 $\mu$m, is preferably 450 gf or less, 440 gf or less, or 430 gf or less.

<Balance of thickness, air permeability, and puncture strength>

The electricity storage device separator of the present embodiment uses a microporous layer comprising a polyolefin having a specific melt flow rate (MFR) and can have a low air permeability and high strength while being a thin film. For example, the electricity storage device separator of the present embodiment (particularly, a separator including a multilayer structure of microporous layers) more preferably has a thickness of 18 $\mu$m or less, an air permeability of 300 s/100 cm$^3$ or less when the thickness of the separator is converted to 14 $\mu$m, and a puncture strength of 300 gf or more. It is even more preferable that the thickness of the multilayer structure be 18 $\mu$m or less, the thickness (thickness as a single layer) of each microporous layer of the present embodiment contained in the multilayer structure be 5 $\mu$m or less, the air permeability when the thickness of the multilayer structure is converted to 14 $\mu$m be 300 s/100 cm$^3$ or less, and the puncture strength be 300 gf or more.

<Balance of thickness, porosity, and air permeability>

The electricity storage device separator of the present embodiment, in one aspect, can have high porosity and low air permeability while being a thin film. In a preferred aspect, the electricity storage device separator has a thickness of 18 $\mu$m or less, a porosity of 42% or greater, and an air permeability of 250 s/100 cm$^3$ or less when the thickness is converted to 14 $\mu$m.

< <Method for manufacturing electricity storage device separator> >

A method for manufacturing the microporous layer according to the present embodiment including the first and second aspects generally comprises a melt extrusion step of melt-extruding a resin composition comprising a polyolefin (hereinafter referred to as a polyolefin-based resin composition) described above to obtain a resin film, and optionally, an annealing step, a stretching step, and a heat relaxation step. Pore opening may be carried out to porosify the resin film before the stretching step, during the stretching step, or after the stretching step.

The polyolefin-based resin composition is, in one aspect, a composition comprising components of the microporous layer (X), and in another aspect, a composition comprising the components of the microporous layer (Y). The polyolefin-based resin composition may optionally contain a resin other than a polyolefin or an additive, depending on the method for manufacturing the microporous layer or the desired physical properties of the microporous layer. Examples of the additive include pore-forming materials, fluorine-based flow modifiers, elastomers, waxes, crystal nucleating agents, antioxidants, metal soaps such as aliphatic carboxylic acid metal salts, ultraviolet absorbers, photo stabilizers, antistatic agents, antifogging agents, and coloring pigments. Examples of the pore-forming material include plasticizers, inorganic fillers, and combinations thereof.

Examples of the plasticizer include hydrocarbons such as liquid paraffin and paraffin wax; esters such as dioctyl phthalate and dibutyl phthalate; and higher alcohols such as oleyl alcohol and stearyl alcohol.

Examples of the inorganic filler include oxide-based ceramics such as alumina, silica (silicon oxides), titania, zirconia, magnesia, ceria, yttria, zinc oxide, and iron oxide; nitride-based ceramics such as silicon nitride, titanium nitride, and boron nitride; ceramics such as silicon carbide, calcium carbonate, aluminum sulfate, aluminum hydroxide, potassium titanate, talc, kaolin clay, kaolinite, halloysite, pyrophyllite, montmorillonite, sericite, mica, amesite, bentonite, asbestos, zeolite, calcium silicate, magnesium silicate, diatomite, and quartz sand; and glass fibers.

Methods for manufacturing a microporous layer are broadly classified into dry methods, which do not use a solvent during pore formation, and wet methods, which use a solvent during pore formation. Examples of the above melt extrusion method include T-die methods and inflation methods.

Examples of the dry method include a method in which a polyolefin-based resin composition is melt-kneaded and extruded, followed by separation at the polyolefin crystal interface by heat treatment and stretching (specifically, a dry lamellar crystal porosification process); and a method in which a polyolefin-based resin composition and an inorganic filler are melt-kneaded and molded into a sheet, followed by separation at the interface between the polyolefin and the inorganic filler by stretching.

Examples of the wet method include a method in which a polyolefin-based resin composition and a pore-forming material are melt-kneaded and molded into a film, the film is stretched as needed, and then the pore-forming material is extracted; and a method in which a polyolefin-based resin composition is dissolved and thereafter immersed in a poor solvent to the polyolefin to simultaneously solidify the polyolefin and remove the solvent.

A single-screw extruder or a twin-screw extruder can be used for melt-kneading the polyolefin-based resin composition. In addition to these, for example, a kneader, a Labo-Plastomill, a kneading roll, or a Banbury mixer can be used.

The temperature of the extruder during melt kneading is preferably "a temperature 20 °C higher than the melting point of the polyolefin-based resin composition" or higher and "a temperature 110 °C higher than the melting point of the polyolefin-based resin composition" or lower. When the temperature is equal to or higher than the above lower limit, the resulting polyolefin-based resin film has a uniform thickness, and the phenomenon of film rupture during extrusion does not easily occur. When the temperature is equal to or lower than the above upper limit, the polyolefin contained in the polyolefin-based resin composition has a high degree of orientation and a lamellar structure is satisfactorily formed in the polyolefin. Thus, the resulting electricity storage device separator has a low air permeability and the resistance of the electricity storage device, such as a lithium-ion secondary cell, is low. When the polyolefin-based resin film has a plurality of layers formed using different polyolefin-based resin compositions, the above melting point refers to the melting point of the polyolefin-based resin composition having a lower melting point. In one aspect, the melting point is evaluated as the peak top temperature of the maximum peak height of endothermic peaks observed when the temperature is increased at a temperature elevation rate of 10 °C/min using a DSC (differential scanning calorimeter).

The draw ratio when extruding the polyolefin-based resin composition from an extruder into a film is preferably 50 or greater, more preferably 75 or greater, and particularly preferably 100 or greater, and is preferably 400 or less, more preferably 350 or less, and particularly preferably 300 or less. The draw ratio refers to a value obtained by dividing the T-die or inflation die lip clearance by the thickness of the polyolefin-based resin film extruded from the die lip. By adjusting the draw ratio within the range indicated above, the molecular orientation of the polyolefin is improved, lamellae can be satisfactorily formed, and air permeability of the separator can be kept low. At the same time, the thickness precision and width precision of the resulting polyolefin-based resin film can be increased without decreasing the film-forming stability of the film.

The polyolefin-based resin composition extruded from a die may be cooled with air. In the first aspect, when a polyolefin resin extruded from the die is sufficiently cooled with air, the polyolefin resin crystallizes and forms lamellae, resulting in a separator having large average and maximum long pore diameters, high porosity, and a microporous layer having a low air permeability. The air volume is preferably 300 L/min or more and 1000 L/min or less for a die width of 500 mm. Setting the air volume equal to or greater than the above lower limit is preferable because the polyolefin-based resin composition extruded from a die is sufficiently cooled with the air, and thus the polyolefin crystallizes to form lamellae, leading to a microporous layer having a low air permeability. Further, setting the air volume equal to or less than the above upper limit is preferable from the viewpoint of improving film-forming stability of the film and the thickness precision and width precision of the resulting polyolefin-based resin sheet. The air temperature, from the viewpoints of film-forming stability, thickness precision, and width precision, is preferably 0 °C or higher and 40 °C or lower.

In the second aspect, the polyolefin-based resin composition extruded from a die is sufficiently cooled with air, whereby the polyolefin crystallizes to form lamellae and satisfactory air permeability is realized. The air volume, from the viewpoint of improving air permeability, is preferably 300 L/min or more, and from the viewpoint of improving film-forming stability of the film and the thickness precision and width precision of the resulting polyolefin-based resin film, is preferably 600 L/min or less.

Examples of a method for manufacturing an electricity storage device separator having a multilayer structure including the microporous layer of the present embodiment and having a plurality of laminated microporous layers include coextrusion methods and lamination methods, but are not limited thereto. In a coextrusion method, the resin compositions of the layers are coextruded and laminated into two or more layers to produce a starting film. The obtained starting film having two or more layers is subjected to stretch porosification, and a microporous layer can be produced thereby. Rather than producing each single-layer microporous layer, it is easier to obtain a microporous layer having high strength by producing a starting film laminated from two or more layers and then opening pores to produce the microporous layer. In a lamination method, layers are adhered to each other by lamination after each layer is produced separately. A lamination method is advantageous from the viewpoints of controlling the average long pore diameter, controlling the pore diameter ratio between the microporous layer (X) and the microporous layer (Y), and suppressing clogging within an electrical storage device. Without wishing to be bound by theory, it is considered that since the microporous layer (X) and the microporous layer (Y) can be formed separately in a lamination method, stricter temperature control and orientation during film formation can be imparted. As a result, satisfactory average long pore diameter and pore diameter ratio are achieved, and clogging tends to be suppressed. Examples of the lamination method include a dry lamination method using an adhesive and a heat lamination method in which a plurality of layers are adhered together by heating. From the viewpoint of further improving air permeability and strength of the resulting electricity storage device separator, the heat lamination method is preferable.

In the lamination method, it is preferable that the resin be discharged at the lowest possible speed and effectively cooled rapidly by blowing low-temperature air as conditions for the extrusion film formation of the microporous layer (X). Normally, it is preferable to form a film with a high discharge rate during film formation. However, it is considered that a satisfactory average long pore diameter and high strength can both be achieved for the microporous layer (X) by intentionally forming a film with a low discharge rate and quenching the film by blowing air of 15 °C or lower. The upper limit value of discharge rate, from the viewpoint of imparting a satisfactory average long pore diameter, is preferably 20 kg/h or less, more preferably 15 kg/h or less, even more preferably 10 kg/h or less, and particularly preferably 8 kg/h or less per m of die width. The lower limit value of discharge rate, from the viewpoint of stability during film formation, is preferably 4 kg/h or more. It is preferable that the film be cooled rapidly with air after film formation. The upper limit of the temperature of blown air is preferably 20 °C or lower, and more preferably 15 °C or lower. By blowing cool air controlled to such a low temperature, the resin after film formation is cooled rapidly while oriented uniformly in the MD. As a result, it is considered that satisfactory pore-opening characteristic can be exhibited in the microporous layer (X) and an average long pore diameter with the range of the present disclosure can be obtained, even when using a resin having a relatively high molecular weight, i.e., an MFR of 0.9 g/10 min or less at a load of 2.16 kg and a temperature of 230 °C.

An annealing step of heat-treating the obtained polyolefin-based resin film is then carried out. This annealing step allows the lamellae that were generated in the polyolefin-based resin film during the extrusion step to grow. By carrying out this treatment, the pore-opening characteristic of the film can be improved, and the air permeability of the resulting electricity storage device separator can be reduced.

The annealing temperature of the polyolefin-based resin film is preferably set to "a temperature 40 °C lower than the melting point of the polyolefin-based resin film" or higher and "a temperature 1 °C lower than the melting point of the polyolefin-based resin film" or lower. However, when a polyolefin-based resin film has a multilayer structure, the annealing temperature is preferably set to "a temperature 40 °C lower than the melting point of the resin film having the lowest melting point" or higher and "a temperature 1 °C lower than the melting point of the resin film having the lowest melting point" or lower. Note that, the annealing temperature is an atmospheric air temperature inside an annealing apparatus. When the annealing temperature is equal to or higher than the above lower limit, the lamellae grow satisfactorily and pores are easily opened in a stretching step of the film. When the annealing temperature is equal to or lower than the above upper limit, collapse of the lamellar structure due to relaxation of polyolefin orientation in the polyolefin-based resin film is suppressed.

The annealing time of the polyolefin-based resin film, from the viewpoints of satisfactory lamella growth and satisfactory porosification of the polyolefin-based resin film in the stretching step, is preferably 10 min or more. In one aspect, the annealing time may be 180 min or less.

Particularly, by annealing at a specific temperature for a long time, crystals grow without disturbing the crystal structure, and thus high pore-opening characteristic is exhibited. As a result, obtaining satisfactory average long pore diameters in both the microporous layer (X) and the microporous layer (Y) tends to be possible. In the annealing step, annealing is carried out preferably in a temperature range of 115 °C or higher and 130 °C or lower, preferably for 30 min or more and more preferably 60 min or more, from the viewpoint of obtaining a satisfactory average long pore diameter to suppress clogging in an electricity storage device.

The polyolefin-based resin film may be annealed while the polyolefin-based resin film is in motion or while the polyolefin-based resin film is wound into a roll.

A stretching step in which the annealed polyolefin-based resin film is stretched and porosified is carried out. As the stretching process, any of uniaxial stretching and biaxial stretching can be used. Although not limited thereto, from the viewpoint of manufacturing cost when using a dry method, uniaxial stretching is preferable. From the viewpoint of improving strength of the resulting separator, biaxial stretching is preferable. Examples of the biaxial stretching include simultaneous biaxial stretching, sequential biaxial stretching, multistage biaxial stretching, and repeating biaxial stretching. From the viewpoints of puncture strength improvement, stretching uniformity, and shutdown characteristics, simultaneous biaxial stretching is preferable. From the viewpoint of ease of control of surface orientation, sequential biaxial stretching is preferable. When a sheet-like molded body is stretched biaxially at a high factor, molecules are oriented in a planar direction, and thus a separator that is difficult to tear and has high puncture strength is likely to be obtained.

It is preferable that the stretching step comprise a first stretching step and a second stretching step following the first stretching step.

In the first stretching step, lamellae generated in the polyolefin-based resin film are separated from each other to cause fine cracks in non-crystalline portions between the lamellae, and a large number of micropores are formed in these cracks as starting points. In the first stretching step, uniaxial stretching in the MD is carried out.

In the first stretching step, the lower limit of the temperature of the polyolefin-based resin film is preferably -20 °C or higher, and more preferably 0 °C or higher. In the first stretching step the upper limit of the temperature of the polyolefin-based resin film is preferably 110 °C or lower, and more preferably 80 °C or lower. When the temperature is equal to or higher than the above lower limit, rupture of the polyolefin-based resin film during stretching is suppressed. When the temperature is equal to or lower than the above upper limit, cracks are satisfactorily generated in non-crystalline portions between lamellae, and neck-in of the film is suppressed.

In the first stretching step, the lower limit of the stretching factor of the polyolefin-based resin film is preferably 1.02 times or greater, and more preferably 1.06 times or greater. In the first stretching step, the upper limit of the stretching factor of the polyolefin-based resin film is preferably 1.5 times or less, and more preferably 1.4 times or less. When the stretching factor is equal to or greater than the above lower limit, micropores in non-crystalline portions between lamellae are easily formed. When the stretching factor is equal to or less than the above upper limit, micropores are not excessively formed, and pore diameter does not excessively decrease. Thus, air permeability can be low. In the present disclosure, the stretching factor of a polyolefin-based resin film refers to the value obtained by dividing a length of the polyolefin-based resin film after stretching by a length of the polyolefin-based resin film before stretching.

The stretching speed in the first stretching step of the polyolefin-based resin film is preferably 10%/min or greater and more preferably 50%/min or greater, and is preferably 1000%/min or less and more preferably 600%/min or less. When the stretching speed is equal to or greater than the above lower limit, uniform micropores in the non-crystalline portions between lamellae is easily formed. When the stretching speed is equal to or less than the above upper limit, rupture of the polyolefin-based resin film can be suppressed.

In the present disclosure, the stretching speed of a polyolefin-based resin film refers to a dimensional change ratio in the stretching direction of the polyolefin-based resin film per unit time.

The stretching method of the polyolefin-based resin film in the above first stretching step is not particularly limited as long as the polyolefin-based resin film can be stretched uniaxially. Examples thereof include methods of stretching the polyolefin-based resin film at a predetermined temperature using a uniaxial stretching apparatus.

The polyolefin-based resin film after uniaxial stretching in the first stretching step is then preferably subjected to a second stretching step such that preferably, the atmospheric temperature inside the apparatus is higher than the atmospheric temperature during the uniaxial stretching in the first stretching step, and a temperature lower than the melting point of the polyolefin-based resin film (resin film with the lowest melting point in case of a multilayer structure) by 1 °C or more and 60 °C or less (in the first aspect) or by 1 °C or more and less than 40 °C (in the second aspect) (specifically, the first stretching step is carried out as cold stretching and the second stretching step is carried out as hot stretching). In the second stretching step, the polyolefin-based resin film is preferably stretched uniaxially in machine direction only. As such, the polyolefin-based resin film is stretched at an atmospheric air temperature higher than the atmospheric air temperature inside the apparatus in the first stretching step, whereby a large number of micropores formed in the polyolefin-based resin film in the first stretching step can grow. When the temperature is equal to or higher than the above lower limit, micropores formed in the polyolefin-based resin film in the first stretching step easily grow, and the air permeability of the resulting electricity storage device separator can be reduced. When the temperature is equal to or lower than the above upper limit, the micropores formed in the polyolefin-based resin film in the first stretching step are not easily blocked, and the air permeability of the resulting electricity storage device separator can be reduced.

In the second stretching step, the stretching factor of the polyolefin-based resin film is preferably 1.5 times or greater and more preferably 1.8 times or greater, and is preferably 3 times or less and more preferably 2.5 times or less. When the stretching factor is equal to or greater than the above lower limit, the micropores formed in the polyolefin-based resin film during the first stretching step grow easily, and air permeability of the resulting electricity storage device separator can be low. When the stretching factor is equal to or less than the above upper limit, the micropores formed in the polyolefin-based resin film in the first stretching step are not easily blocked, and air permeability of the resulting electricity storage device separator can be low.

In the second stretching step, the stretching speed of the polyolefin-based resin film, from the viewpoint of uniformly widening the micropores formed in the first stretching step, is preferably 60%/min or less, or 30%/min or less. The stretching speed, from the viewpoint of process efficiency, may be, for example, 2%/min or greater, or 3%/min or greater.

The stretching method of the polyolefin-based resin film in the second stretching step is not particularly limited as long as the polyolefin-based resin film can be stretched uniaxially. Examples thereof include methods of uniaxial stretching at a predetermined temperature using a uniaxial stretching apparatus.

In one aspect, the polyolefin-based resin film after the stretching step (preferably after uniaxial stretching in the second stretching step) is subjected to a heat relaxation step of relieving residual stress by heating. Stretching in the second stretching step may cause residual stress in the polyolefin-based resin film. The heat relaxation step relieves the residual stress, suppresses heat shrinkage of the obtained polyolefin-based resin microporous layer due to heating separate from the heat relaxation step, and improves safety of the resulting electricity storage device separator. The heat relaxation step can be carried out using a tenter or a roll stretcher.

As described above, in order to improve dimensional stability of the polyolefin-based resin microporous layer during heating, it is necessary to relieve the residual stress in the polyolefin-based resin film. Therefore, the atmospheric air temperature inside the apparatus in the heat relaxation step is preferably a temperature that is 40 °C lower or 20 °C lower than the melting point of the polyolefin-based resin film (resin film having the lowest melting point in case of a multilayer structure) or higher. From the viewpoint of suppressing blocking of the micropores formed in the stretching step, the above temperature is preferably lower than the melting point of the polyolefin-based resin film (resin film having the lowest melting point in case of a multilayer structure) by 1 °C or more or 4 °C or more.

The lower limit of the heat shrinkage rate of the polyolefin-based resin film in the heat relaxation step is preferably 25% or greater, and more preferably 30% or greater. The upper limit of the heat shrinkage rate of the polyolefin-based resin film in the heat relaxation step is preferably 60% or less, and more preferably 50% or less. The heat shrinkage rate of a polyolefin-based resin film in the heat relaxation step refers to the value obtained by dividing a shrinkage length of the polyolefin-based resin film in the stretching direction in the heat relaxation step by a shrinkage length of the polyolefin-based resin film in the stretching direction after the second stretching step, and then multiplying by 100. When the heat shrinkage rate is equal to or greater than the above lower limit, residual stress in the polyolefin-based resin film is sufficiently relieved, the resulting polyolefin-based resin film has satisfactory dimensional safety during heating, and safety of the electricity storage device, such as a lithium-ion secondary cell, at high temperatures is satisfactory. When the heat shrinkage rate is equal to or less than the above upper limit, the polyolefin-based resin film does not easily sag, and poor winding of a roll or deterioration in uniformity is suppressed.

In the second stretching step and heat relaxation step, it is preferable to adjust the stretching speed and conveyor speed so that neither become excessively high, from the viewpoint of sufficiently relieving stress to reduce heat shrinkage rate.

It is preferable that after the heat relaxation step, heat relaxation be reapplied at a temperature equal to the temperature of the heat relaxation step or higher, or at a temperature 20 °C higher than the temperature of the heat relaxation step or higher. By applying the present step, an electricity storage device separator having a more satisfactory heat shrinkability can be obtained.

<<Electricity storage device>>

The electricity storage device of the present embodiment comprises the electricity storage device separator of the present embodiment. The electricity storage device of the present embodiment comprises a positive electrode and a negative electrode. Preferably, the electricity storage device separator is laminated between the positive electrode and the negative electrode, is positioned outside the positive or negative electrode within a cell outer packaging, or envelops an electrode. Lead bodies may be connected to the positive electrode and the negative electrode, if desired, so that the positive electrode and the negative electrode can be connected to an external device.

Examples of the electricity storage device include, but are not limited to, lithium secondary cells, lithium-ion secondary cells, sodium secondary cells, sodium-ion secondary cells, magnesium secondary cells, magnesium-ion secondary cells, potassium secondary cells, potassium-ion secondary cells, aluminum secondary cells, aluminum-ion secondary cells, nickel-hydrogen cells, nickel-cadmium cells, electric double-layer capacitors, lithium-ion capacitors, redox flow cells, lithium-sulfur cells, lithium-air cells, and zinc-air cells. Of these, from the viewpoint of suitability to the separator according to the present embodiment, lithium secondary cells, lithium-ion secondary cells, nickel-hydrogen cells, and lithium-ion capacitors are preferable, and lithium-ion secondary cells are more preferable.

The electricity storage device can be produced, for example, by the following method:
A positive electrode and a negative electrode are laminated via the separator described above interposed therebetween and wound as needed to form a laminated electrode body or a wound electrode body, which is then wrapped in an outer packaging. In this case, the positive and negative electrodes within the outer packaging can each be connected to a lead body and arranged such that the end of the lead body protrudes outside the outer packaging. When there are a plurality of positive electrodes and a plurality of negative electrodes, tabs of the same polarity may be joined by welding to form a single lead body, which may then protrude outside the outer packaging. Tabs of the same polarity can be made from the exposed portions of the current collector, or by welding a metal piece to the exposed portions of the current collector. The positive and negative electrodes are connected to the positive and negative terminals of the outer packaging via lead bodies. In this case, a portion of a lead body and a portion of the outer packaging may be joined by heat fusion. Moreover, a nonaqueous electrolytic solution containing a nonaqueous solvent such as chain and/or cyclic carbonate and an electrolyte such as a lithium salt is injected into the outer packaging, which is then sealed, to produce an electricity storage device.

EXAMPLES

Hereinafter, the present invention will be specifically described with reference to the Examples and Comparative Examples. However, the present invention is not limited to the following Examples.

<<Measurement and evaluation methods>>

(1) Example A (first aspect)

[Sample production]

For the evaluation of a microporous layer in a separator having a multilayer structure, a sample obtained by attaching adhesive tape to an edge of the separator and pulling on the tape to peel off each microporous layer was used. In a separator having a three-layer structure in which two polypropylene (PP) layers or polyethylene (PE) layers are present, values obtained by arithmetically averaging various values of the two layers by the thickness of each layer were adopted as values for various evaluations of the two layers. However, the thicknesses and the characteristic values of the two layers were similar in all cases.

[Measurement of melt flow rate (MFR)]

The MFRs of the microporous layer (X) and the polypropylene were each measured under the conditions of a temperature of 230 °C and a load of 2.16 kg in accordance with JIS K 7210. The melt flow rates (MFRs) of the microporous layer (Y) and the polyethylene were measured under the conditions of a temperature of 190 °C and a load of 2.16 kg in accordance with JIS K 7210.

[Measurements of Mw and Mn by GPC (gel permeation chromatography)]

Using an Agilent PL-GPC220 manufactured by Agilent Technologies, standard polystyrene was measured under the following conditions to generate a calibration curve. Chromatography measurement was also carried out under the same conditions for the sample polymer. Based on the calibration curve, standard polystyrene-converted weight average molecular weight (Mw) and number average molecular weight (Mn) of the polymer and a value (Mw/Mn) obtained by dividing the weight average molecular weight (Mw) by the number average molecular weight (Mn) were calculated under the following conditions.

Column: two TSKgel GMHHR-H(20) HT (7.8 mm I.D. × 30 cm)
Mobile phase: 1,2,4-trichlorobenzene
Detector: RI
Column temperature: 160 °C
Sample concentration: 1 mg/ml
Calibration curve: polystyrene

[Measurement of melt tension]

Using a capillograph manufactured by Toyo Seiki Seisaku-sho, Ltd., the melt tension (mN) of the microporous layer was measured under the following conditions.

- Capillary: diameter 1.0 mm, length 20 mm
- Cylinder extrusion speed: 2 mm/min
- Take-up speed: 60 m/min
- Temperature: 230 °C

[Measurement of pentad fraction]

The pentad fraction of the polypropylene was calculated by the peak height method from the attributed $^{13}$C-NMR spectrum based on the description in the Polymer Analysis Handbook (edited by the Japan Society for Analytic Chemistry). The measurement of $^{13}$C-NMR spectrum was carried out using a JEOL-ECZ500 manufactured by JEOL Ltd., in which the polypropylene was dissolved in o-dichlorobenzene-d, under the conditions of a measurement temperature of 145 °C and a number of scans of 25000 times.

[Measurement of thickness ($\mu$m)]

The thickness ($\mu$m) of the separator was measured at a room temperature of 23 ± 2 °C using a Digimatic Indicator IDC112 manufactured by Mitutoyo Corporation.

[Measurement of porosity (%)]

A 10 cm × 10 cm square sample was cut from the separator. The volume ($cm^3$) and mass (g) thereof were determined, and the porosity was calculated from these values and the density ($g/cm^3$) using the following equation.

$$\text{Porosity} = (\text{volume} - \text{mass/density})/\text{volume} \times 100$$

[Measurement of air permeability resistance (s/100 cm$^3$)]

Using a Gurley air permeability meter in accordance with JIS P-8117, the air permeability resistance (s/100 cm$^3$) of the separator was measured, which was then divided by the thickness (in units of $\mu$m) and multiplied by 14 to calculate the air permeability resistance (air permeability) per 14 $\mu$m thickness.

[Measurement of puncture strength]

A needle of a hemispherical tip having a radius of 0.5 mm was prepared, a separator was interposed between two plates having an aperture with a diameter (dia.) of 11 mm, and the needle, separator, and plates were set. Using an "MX2-50N" manufactured by Imada Co., Ltd., a puncture test was carried out under the conditions of a radius of curvature of 0.5 mm at the tip of the needle, a diameter of 11 mm for the aperture of the separator retention plates, and a puncture speed of 25 mm/min. The needle was brought into contact with the separator and the maximum puncture load (i.e., puncture strength (gf)) was measured. The obtained puncture strength was divided by the thickness (in units of $\mu$m) and multiplied by 14, whereby a puncture strength per 14 $\mu$m thickness was calculated.

[Tensile test]

Tensile testing of the separator was carried out using a tensile tester (Shimadzu Corporation, Autograph AG-A type). The strength at sample rupture was divided by the sample cross-sectional area before the test to obtain a tensile strength at break (kg/cm$^2$). The tensile strength SMD in the MD and tensile strength STD in the TD were measured under the measurement conditions of: temperature: 23 $\pm$ 2 °C, sample shape: width 10 mm $\times$ length 100 mm, distance between chucks: 50 mm, and tensile speed: 200 mm/min, and SMD/STD was calculated.

[Measurements of average long pore diameter and maximum long pore diameter]

The average long pore diameter and the maximum long pore diameter were measured by image analysis via SEM observation of pores present in the MD-TD surface or ND-MD cross-section. First, as a pretreatment, the separator was dyed with ruthenium to obtain a dyed separator. The dyed separator was then impregnated with an epoxy resin, which was cured at 60 °C for 12 h or longer to embed the dyed separated in the epoxy resin. The resulting embedded material was roughly cross-sectioned with a razor and then subjected to cross-section milling using an ion milling apparatus (E3500 Plus, manufactured by Hitachi High-Tech Corporation) to obtain a cross-sectioned separator in which the ND-MD cross-section of the separator was exposed. The dyed separator and the cross-sectioned separator were each fixed to a SEM sampling stage with a conductive adhesive (carbon-based), dried, and then subjected to a conductive treatment using an osmium coater (HPC-30W, manufactured by Vacuum Device). Thereafter, the osmium coating was carried out under the conditions of an applied voltage adjustment knob setting of 4.5 and a discharge time of 0.5 s to obtain microscope samples for an MD-TD surface observation and an ND-MD cross-section observation.
Each of the above microscope samples was observed at three arbitrary points with a scanning electron microscope (SEM) (manufactured by Hitachi High-Tech Corporation, S-4800) at an acceleration voltage of 1.0 kV, an operating distance of 5 mm, and a magnification of 30,000$\times$ to acquire SEM images. In a 4 $\mu$m $\times$ 4 $\mu$m field of view of the obtained SEM images of the MD-TD surface or ND-MD cross-section, the long pore diameter of each pore was measured, and if necessary, a binarization process was carried out using the Otsu method with image processing software ImageJ to differentiate the resin parts and the pore parts, to calculate the maximum and average long pore diameters. At this time, pores straddling within the area and outside the area of the above 4 $\mu$m $\times$ 4 $\mu$m and micropores having an area of 0.001 nm$^2$ or less were excluded from measurement. For the long pore diameter of the pores, an area-weighted average value of the pores was calculated to obtain an average long pore diameter. The largest of the long pore diameters was adopted as the maximum long pore diameter. For the examples having multiple layers of the same microporous layer, a value obtained by arithmetically averaging the layer thicknesses of the layers was used as the value of the microporous layer. The maximum long pore diameters and average long pore diameters measured by SEM observations of MD-TD surfaces and ND-MD cross-sections are shown in Table 1 to Table 9.

[Measurement of heat shrinkage rate]

Samples obtained by cutting a separator into squares of 50 mm in both the MD and TD were placed in a hot-air dryer (DF1032, manufactured by Yamato Scientific Co., Ltd.) heated to 105 °C and 120 °C (at normal pressure and in atmospheric air). The samples were removed from the hot-air dryer 1 h and 2 h later and heat shrinkage rate was determined. The samples were placed on copy paper and then in the hot-air dryer so as to not adhere to the inner walls of the dryer and to prevent the samples from fusing together.

Heat shrinkage rate (%): (dimension before heating (mm) - dimension after heating (mm))/(dimension before heating (mm)) × 100

[Production of sheet-like lithium-ion secondary cell]

An electrolytic solution containing $LiPF_6$ in a concentration of 1 mol/L as a lithium salt in a mixture of ethylene carbonate and ethyl methyl carbonate at a volume ratio of 1:2 was used as the electrolytic solution.

A lithium-nickel-manganese-cobalt composite oxide ($LiNi_{0.5}Co_{0.2}Mn_{0.3}O_2$) as a positive electrode active material, carbon black powder (manufactured by Timcal Ltd., trade name: Super P Li) as a conductive aid, and PVDF as a binder were mixed in a mass ratio of composite oxide:conductive aid:binder = 100:3.5:3. The resulting mixture was dispersed in a solvent (N-methylpyrrolidone) to form a dispersion. The dispersion was applied onto both sides of an aluminum foil acting as a positive electrode current collector having a thickness of 15 $\mu$m, and then the solvent was dried away, followed by rolling with a roll press to produce a double-side-coated positive electrode.

Graphite powder (manufactured by Hitachi Chemical Co., Ltd., trade name: MAG) having a particle size of 22 $\mu$m (D50) as a negative electrode active material, a binder (Nippon Zeon Co., Ltd., trade name: BM400B), and carboxymethylcellulose (manufactured by Daicel Corporation, trade name: #2200) as a thickener were mixed in a mass ratio of graphite powder:binder:thickener = 100:1.5:1.1. The resulting mixture was dispersed in a solvent (water) to produce an aqueous dispersion. The aqueous dispersion was applied onto one side of a copper foil acting as a negative electrode current collector having a thickness of 10 $\mu$m to produce a single-side-coated body. Separately from the single-side-coated body, the aqueous dispersion was applied to both sides of a copper foil acting as a negative electrode current collector having a thickness of 10 $\mu$m to produce a double-side-coated body. The solvent was dried away from the single-side-coated body and the double-side-coated body, from which a single-side-coated negative electrode and a double-side-coated negative electrode were produced, respectively, by rolling the applied copper foils with a roll press.

The resulting positive electrode and negative electrodes were placed on opposite surfaces of the corresponding active materials and were laminated in the order of single-side-coated negative electrode/double-side-coated positive electrode/double-side-coated negative electrode/double-side-coated positive electrode/single-side-coated negative electrode while interposed by separators. The resulting laminated body was then inserted into a bag (cell outer packaging) formed of a laminate film in which both sides of an aluminum foil (thickness of 40 $\mu$m) were coated with a resin layer. Terminals of the inserted electrodes protrude from the cell outer packaging. Thereafter, 0.8 mL of electrolytic solution prepared as described above was injected into the bag, and the bag was vacuum-sealed, whereby a sheet-like lithium-ion secondary battery was produced.

[Cell performance evaluation and observation of clogging]

The obtained sheet-like lithium-ion secondary cell was stored in a thermostatic chamber (manufactured by Futaba Kagaku Co., Ltd., trade name: PLM-73S) set at 25 °C, connected to a charge/discharge apparatus (manufactured by Aska Electronic Co., Ltd., trade name: ACD-01), and left for 16 h. The cell was then subjected to a charge/discharge cycle of charging at a constant current of 0.05 C until a voltage of 4.35 V is reached, charging at a constant voltage of 4.35 V for 2 h, and then discharging to 3.0 V at a constant current of 0.2 C. The cycle was repeated three times to carry out an initial charging of the cell. Note that, 1 C indicates the current value when discharging the full capacity of a cell in 1 h.

After the above initial charging, the above cell was stored in a thermostatic chamber at 50 °C. The cell was subjected to a charge/discharge cycle of charging at a constant current of 1 C until a voltage of 4.35 V is reached, charging at a constant voltage of 4.35 V for 1 h, and then discharging to 3.0 V at a constant current of 1 C. The cycle was repeated 100 times. The cell cycle test is a test in which the above charge/discharge cycle is repeated 100 times.

The value (percentage) obtained by dividing the discharge capacity (mAh) at the 100th cycle by the discharge capacity (mAh) at the 1st cycle was designated as the cycle capacity retention rate. After 100 cycles, the sheet-like lithium-ion secondary cell was disassembled in an argon atmosphere, and the separator was removed. A first immersion cleaning was carried out by immersing the separator in a tank containing ethyl methyl carbonate for 30 s and then removing the separator therefrom. Immersion cleaning was carried out three times. The ethyl methyl carbonate in the tank was replaced at the second and third immersion cleaning. Thereafter, the negative electrode side surface of the separator was observed with an optical microscope at a magnification of 100 to 1000× in an area of 1 mm square to confirm the presence or absence of clogging on the separator surface. Tables 1 to 7 show the presence or absence of clogging.

[Short-circuit evaluation within lithium-ion secondary cell]

The obtained sheet-like lithium-ion secondary cell was stored in a thermostatic chamber (manufactured by Futaba Kagaku Co., Ltd., trade name: PLM-73S) set at 25 °C, connected to a charge/discharge apparatus (manufactured by Aska Electronic Co., Ltd., trade name: ACD-01), and left for 16 h. The cell was then subjected to a charge/discharge cycle of charging at a constant current of 0.05 C until a voltage of 4.35 V is reached, charging at a constant voltage of 4.35 V for 2 h, and then discharging to 3.0 V at a constant current of 0.2 C. The cycle was repeated three times to carry out an initial charging of the cell. Note that, 1 C indicates the current value when discharging the full capacity of a cell in 1 h.
After the above initial charging, the above cell was charged to 4.0 V at a constant current of 0.2 C and stored in a thermostatic chamber. The temperature in the thermostatic chamber was raised from 25 °C by 5 °C every 10 min. The temperature at which the cell voltage dropped to 0.5 V or less was confirmed and taken as the short-circuit temperature, which is an indicator of cell safety. The results are shown in Tables 8 and 9.

(2) Example B (first aspect)

[Sample production]

Production was carried out in the same manner as in Example A.

[Measurement of melt flow rate (MFR)]

The melt flow rates (MFRs) of the microporous layer (X) and the polypropylene were each measured under the conditions of a temperature of 230 °C and a load of 2.16 kg in accordance with JIS K 7210 (in units of g/10 min). The melt flow rates (MFRs) of the microporous layer (Y) and the polyethylene were measured under the conditions of a temperature of 190 °C and a load of 2.16 kg in accordance with JIS K 7210.

[Measurement by GPC (gel permeation chromatography)]

Measurement was carried out in the same manner as in Example A.

[Measurement of melt tension]

Measurement was carried out in the same manner as in Example A.

[Measurement of pentad fraction]

Measurement was carried out in the same manner as in Example A.

[Measurement of thickness ($\mu$m)]

Measurement was carried out in the same manner as in Example A.

[Measurement of Porosity (%)]

Measurement was carried out in the same manner as in Example A.

[Air permeability (s/100 cm$^3$)]

Using a Gurley air permeability meter in accordance with JIS P-8117, the air permeability resistance (s/100 cm$^3$) of the separator was measured, which was then divided by the thickness (in units of $\mu$m) and multiplied by 16 to calculate the air permeability resistance (air permeability) per 16 $\mu$m thickness.

[Evaluation of puncture strength]

A needle of a hemispherical tip having a radius of 0.5 mm was prepared, a separator was interposed between two plates having an aperture with a diameter (dia.) of 11 mm, and the needle, separator, and plates were set. Using an "MX2-50N" manufactured by Imada Co., Ltd., a puncture test was carried out under the conditions of a radius of curvature of 0.5 mm at the tip of the needle, a diameter of 11 mm for the aperture of the separator retention plates, and a puncture speed of 25 mm/min. The needle was brought into contact with the separator and the maximum puncture load (i.e., puncture strength (gf)) was measured. The obtained puncture strength was divided by the thickness (in units of $\mu$m) and multiplied by 16, whereby a puncture strength per 16 $\mu$m thickness was calculated.

[Evaluation of average long pore diameter]

Evaluation was carried out in the same manner as in Example A.

[Production of sheet-like lithium-ion secondary cell]

Production was carried out in the same manner as in Example A.

[Cell performance evaluation and observation of clogging]

Both were carried out in the same manner as in Example A.

(3) Example C (second aspect)

[Sample production]

Production was carried out in the same manner as in Example A.

[Measurement of melt flow rate (MFR)]

The MFRs of the polypropylene and the polypropylene layer were each measured under the conditions of a temperature of 230 °C and a load of 2.16 kg in accordance with JIS K 7210. The melt flow rate (MFR) of the polyethylene was measured under the conditions of a temperature of 190 °C and a load of 2.16 kg in accordance with JIS K 7210.

[Measurements of Mw and Mn by GPC (gel permeation chromatography)]

Measurements were carried out in the same manner as in Example A.

[Measurement of melt tension]

Measurement was carried out in the same manner as in Example A.

[Measurement of pentad fraction]

Measurement was carried out in the same manner as in Example A.

[Measurement of wide-angle X-ray scattering (orientation ratio)]

The (110) crystal peak area ratio (MD/TD) of the polypropylene microporous layer was measured by transmission wide-angle X-ray scattering (WAXS). The WAXS measurement was carried out under the following conditions.

Apparatus name: NANOPIX, manufactured by Rigaku Corporation
X-ray wavelength $\lambda$: 0.154 nm
Optical system: point collimation

1st slit: 0.55 mm $\phi$
2nd slit: Open
3rd slit: 0.35 mm $\phi$

Exposure time: 900 s
Detector: HyPix-6000 (two-dimensional detector)
Camera length: 85.7 mm

X-ray entered into one microporous layer sample from a direction normal to the film, and transmitted scattered light was detected. To reduce scattering from sources other than the sample as much as possible, the measurement was carried out using a vacuum chamber in which the area from the sample to the beam stop was placed in a vacuum. Since the HyPix-6000 has a blind region in the detector, results of two measurements by moving the detector vertically were combined to obtain two-dimensional data with no blind region. Transmittance correction and empty cell scattering correction were applied to the obtained two-dimensional WAXS pattern. Next, circular averaging was applied to convert the scattering data into one dimension, and Bragg angles $\theta s$ and $\theta e$ corresponding to the tails of the crystal peak from the (110) plane of polypropylene on small-angle side and wide-angle side were determined. The azimuthal angle distribution of scattering intensities in the range of $2\theta s < 2\theta < 2\theta e$ (azimuthal angle distribution of crystal diffraction peak intensities from the (110) plane) for the two-dimensional WAXS pattern to which transmittance correction and empty cell scattering correction were applied was then calculated. An example of the resulting azimuthal angle distribution of scattering intensities in the range of $2\theta s < 2\theta < 2\theta e$ is shown in FIG. 1. In the azimuthal angle distribution map of scattering intensities in the range of $2\theta s < 2\theta < 2\theta e$, the (110) peak from the c-axis-oriented crystal, in which the crystal c-axis is MD-oriented, is observed in the TD, and the (110) peak from the a-axis-oriented crystal, in which the crystal a-axis is MD-oriented, is observed near the MD. The peak from the c-axis-oriented crystal was approximated by one Gaussian function, the peak from the a-axis-oriented crystal was approximated by two Gaussian functions, and the peaks were separated. An example thereof is shown in FIG. 1. Igor Pro 8 ver. 8.0.0.10, a software by WaveMetrics, was used for the peak separation. The area of the peak from the c-axis-oriented crystal (crystal with c-axis oriented in the MD) obtained by such peak separation is designated as S_MD, the area (sum of areas of two Gaussian functions) of the peak from the a-axis-oriented crystal (crystal with c-axis oriented near the TD) is designated as S_TD, and the (110) crystal peak area ratio (MD/TD) is defined as S_MD/S_TD. As shown in FIG. 1, two peaks from the c-axis-oriented crystal and two peaks from the a-axis-oriented crystal are observed in the azimuthal angle distribution map of scattering intensities. Thus, the averages of the respective peak areas were defined as S_MD and S_TD.

[Measurement of thickness ($\mu$m)]

Measurement was carried out in the same manner as in Example A.

[Measurement of porosity (%)]

Measurement was carried out in the same manner as in Example A.

[Measurement of air permeability resistance (s/100 cm$^3$)]

Measurement was carried out in the same manner as in Example A.

[Measurement of puncture strength]

Measurement was carried out in the same manner as in Example A.

[Measurement of heat shrinkage rate]

Samples obtained by cutting a separator into squares of 50 mm in both the MD and TD were placed in a hot-air dryer (DF1032, manufactured by Yamato Scientific Co., Ltd.) heated to 105 °C (at normal pressure and in atmospheric air). The samples were removed from the hot-air dryer 1 h later, and heat shrinkage rate was determined. The samples were placed on copy paper and then in the hot-air dryer so as to not adhere to the inner walls of the dryer and to prevent the samples from fusing together.

$$\text{Heat shrinkage rate (\%): (dimension before heating (mm) - dimension after heating (mm))/(dimension before heating (mm))} \times 100$$

[Production of positive electrode]

A slurry solution was prepared by mixing $LiNi_{1/3}Mn_{1/3}Co_{1/3}O_2$ as a positive electrode active material, carbon black as a conductive aid, and a polyvinylidene fluoride solution as a binder at a solid content mass ratio of 91:5:4, adding thereto N-methyl-2-pyrrolidone as a dispersion solvent so as to obtain a solid content of 68% by mass, and further mixing. The slurry solution was applied onto one side of a 15 $\mu$m-thick aluminum foil, and then the solvent was dried away so that the application amount on the positive electrode was 175 g/m². The aluminum foil was further rolled with a roll press so that the density of the positive electrode mixture portion was 2.8 g/cm³ to obtain a positive electrode sheet. Thereafter, the aluminum foil was cut so that the applied portion had a size of 20 mm × 20 mm and included an exposed portion of the aluminum foil to obtain a positive electrode.

[Production of negative electrode]

A slurry solution was prepared by mixing artificial graphite as a negative electrode active material and styrene-butadiene rubber and carboxymethyl cellulose aqueous solution as binders at a solid content mass ratio of 96.4:1.9:1.7, adding thereto water as a dispersion solvent so as to obtain a solid content of 50% by mass, and further mixing. The slurry solution was applied onto one side of a 10 μm-thick copper foil, and then the solvent was dried away so that the application amount on the negative electrode was 86 g/m². The copper foil was further rolled with a roll press so that the density of the negative electrode mixture portion was 1.45 g/cm³. Thereafter, the copper foil was cut so that the applied portion had a size of 25 mm × 25 mm and included an exposed portion of copper foil to obtain a negative electrode.

[Preparation of nonaqueous electrolytic solution]

$LiBF_4$ was dissolved as a solute at a concentration of 1.0 mol/L in a mixed solvent of propylene carbonate:ethylene carbonate:γ-butylactone = 1:1:2 (volume ratio) and 0.5% by weight of trioctyl phosphate was further added thereto to prepare a nonaqueous electrolytic solution.

[Production of laminated electrode body]

A sample 1 was obtained by cutting a 30 mm × 30 mm square sample from a separator and immersing in the above nonaqueous electrolytic solution for 1 min or longer. The negative electrode, the sample 1, the positive electrode, a Kapton film, and silicone rubber having a thickness of 4 mm were laminated in this order to produce a laminated electrode body.

[Fuse short-circuit test]

The laminated electrode body was placed on a ceramic plate in which a thermocouple was embedded. While applying a surface pressure of 1.5 MPa with a hydraulic press, the temperature of a heater was increased, and the temperature and resistance values were continuously measured using an alternating current electrical resistance measuring apparatus "AG-4311" (manufactured by Ando Electric Co., Ltd.) connected to the current collector portions of a positive electrode and a negative electrode. The temperature was increased from room temperature of 23 °C to 220 °C at a rate of 15 °C/min, and the impedance (resistance value) was measured with a 1 kHz alternating current. By using the actual positive and negative electrodes and applying a surface pressure, the fuse short-circuit behavior within a cell can be reflected.

The value obtained by multiplying the obtained impedance (Ω) by the effective positive electrode area of 4 cm² was designated as the impedance (Ω·cm²) per positive electrode unit area. The temperature at which the impedance per positive electrode unit area reached 100 Ω·cm² was designated as the fuse temperature (°C), and a pore-blocking state was reached. The temperature at which the impedance per positive electrode unit area falls below 100 Ω·cm² after the separator reached a pore-blocking state was designated as the short-circuit temperature (°C).

[Production of laminated cell (lithium-ion secondary cell sample)]

Except that the tab portion was removed and punched into a 30 mm × 50 mm rectangular shape in the above [Production of positive electrode], a positive electrode was obtained in the same manner.

Except that the tab portion was removed and punched into a 32 mm × 52 mm rectangular shape in the above [Production of negative electrode], a negative electrode was obtained in the same manner.

A solution (manufactured by Kishida Chemical Co., Ltd., LBG00069) containing $LiPF_6$ salt in a concentration of 1 mol/L as the lithium salt in a mixed solvent of ethylene carbonate and ethyl methyl carbonate mixed in a volume ratio of 1:2 as the nonaqueous solvent was used.

The separators produced in the Examples and Comparative Examples described below were each punched into 34 mm × 54 mm rectangles. The positive electrode, the separator, and the negative electrode were arranged in this order so that the layer consisting of a mixture comprising the positive electrode active material of the positive electrode described above and the layer consisting of a mixture comprising the negative electrode active material of the negative electrode described above each face a separator surface, laminated, and inserted into a bag made of a laminate film in which both sides of an aluminum foil (thickness of 40 $\mu$m) were coated with a resin layer, with the terminals of the positive and negative electrodes protruding therefrom. An operation of adding 0.6 g of electrolytic solution, reducing pressure to -90 kPa, and returning pressure to -30 kPa was then carried out twice. Pressure was then held at -95 kPa for 5 min. After returning to normal pressure, additional electrolytic solution was added so that the total amount thereof was 0.6 g. Thereafter, pressure was reduced to -85 kPa and sealing was carried out to obtain a laminated cell.

[Heating test]

The obtained lithium-ion secondary cell was placed into a thermostatic chamber (manufactured by Futaba Kagaku Co., Ltd., trade name: PLM-73S) set at 25 °C, connected to a charging/discharging apparatus (manufactured by Aska Electronic Co., Ltd., trade name: ACD-01), charged at a constant current of 0.05 C to 4.35 V, once a voltage of 4.35 V was reached, charged at a constant voltage of 4.35 V for 2 h, and then discharged to 3.0 V at a constant current of 0.2 C.

The cell was subsequently charged at a constant current of 0.33 C. When the voltage reached 4.35 V, the cell was charged at a constant voltage of 4.35 V for 1 h, and then discharged to 3.0 V at a constant current of 0.33 C.

Charging and discharging were subsequently carried out in the same manner. The cell was charged at 0.33 C. When the voltage reached 4.35 V, the cell was charged at a constant voltage of 4.35 V for 1 h. The charged cell was restrained at 1.5 MPa and placed into an oven. The temperature was raised at 5 °C/min up to 200 °C, and the voltage was monitored for short-circuiting. A cell was rated good if no short circuit was observed, and was rated poor if a short circuit was observed. A short circuit herein means that a cell voltage falls below 2 V.

<<Examples and Comparative Examples>>

(1) Example A (first aspect)

<Example 1>

[Production of single-layer separator (microporous layer (X))]

A high-molecular-weight polypropylene resin (PP, MFR (230 °C) = 0.51 g/10 min, density = 0.91 g/cm$^3$, Mw/Mn = 5.2, pentad fraction = 99.3%) was melted in a 2.5-inch extruder and fed using a T-die adjusted to a die width of 500 mm and a die lip clearance of 3.3 mm and a gear pump. The temperature of the T-die was set to 210 °C. The molten polymer was discharged from the T-die. Thereafter, the discharged polymer was sufficiently cooled with blown air having an air volume of 500 L/min at 12 °C and wound into a roll. The starting film wound into a roll had a thickness of 15 $\mu$m and a draw ratio of 220. The starting film was then annealed at 130 °C for 20 min. The annealed starting film was cold-stretched to 8% at room temperature, then hot-stretched by 185% at 116 °C, and heat-relaxed by 45% at 126 °C to form micropores, whereby a separator composed of a microporous layer (X) having a PP single-layer structure was obtained. After the above stretch porosification, the air permeability, puncture strength, porosity, average long pore diameter, and maximum long pore diameter of the obtained separator were measured. The results are shown in Tables 1 to 3.

<Examples 2 to 11>

Except that the raw materials and manufacturing conditions were changed as indicated in Tables 1 to 3, separators composed of the microporous layer (X) were obtained according to the same method as in Example 1, and the resulting separators were evaluated.

<Comparative Examples 1 to 11>

Except that the raw materials and manufacturing conditions were changed as indicated in Tables 4 and 5, separators composed of the microporous layer (X) were produced according to the same method as in Example 1, and the separators were evaluated.

<Example 12>

[Production of three-layer separator (microporous layer (X)/microporous layer (Y)/microporous layer (X)]

A high-molecular-weight polypropylene resin (PP, MFR (230 °C) = 0.51 g/10 min, density = 0.91 g/cm$^3$, Mw/Mn = 5.2, pentad fraction = 99.3%) was melted in a 2.5-inch extruder and fed using a T-die and a gear pump. The temperature of the T-die was set to 230 °C. The molten polymer was discharged from the T-die. Thereafter, the discharged polymer was cooled with blown air, and a PP starting film (X'), which is a precursor of microporous layer (X), was wound into a roll.

Likewise, a polyethylene resin (PE, MFR (190 °C) = 0.38 g/10 min, density = 0.96 g/cm$^3$) was melted in a 2.5-inch extruder and fed using a T-die and a gear pump. The temperature of the T-die was set to 220 °C. The molten polymer was discharged from the T-die. Thereafter, the discharged polymer was cooled with blown air, and a PE starting film (Y'), which is a precursor of microporous layer (Y), was wound into a roll.

The PP starting film (X') and the PE starting film (Y') wound into rolls each had a thickness of 5 μm. The PP starting film (X') and the PE starting film (Y') were bound into the form of PP starting film (X')/PE starting film (Y')/PP starting film (X') to obtain a starting film having a three-layer structure of PP/PE/PP. The starting film having the three-layer structure was then annealed at 130 °C for 20 min. The annealed starting film was cold-stretched to 11% at room temperature, then hot-stretched to 158% at 125 °C, and heat-relaxed to 113% at 125 °C to form micropores, whereby a separator having a PP/PE/PP three-layer structure composed of microporous layer (X)/microporous layer (Y)/microporous layer (X) was obtained.

After the above stretch porosification, the air permeability resistance and puncture strength of the obtained three-layer-structure separator, as well as the MFR and melt tension of the microporous layer (X), were measured. Note that, the MFR value of the microporous layer (X) was the same as the MFR value of the polypropylene resin used for manufacturing the microporous layer (X). In other words, the MFR value of the polyolefin used to manufacture the microporous layer can be regarded as the MFR value of the microporous layer. The lower limit thickness of the PP starting film (X') was evaluated by increasing the take-up speed while keeping the discharge rate constant after manufacturing the PP starting film (X'). Further, the obtained PP starting film having the lower limit thickness was laminated with the above 5 μm-thick PE starting film (Y'), and then subjected to stretch porosification under the above annealing and stretching conditions (annealed at 125 °C for 20 min, cold-stretched to 11% at room temperature, hot-stretched to 158% at 125 °C, and heat-relaxed to 113% at 125 °C), whereby a separator having a three-layer structure was produced and the thickness of the separator was confirmed. The results are shown in Table 6.

<Examples 13 to 16>

Except that the raw materials and manufacturing conditions were changed as indicated in Table 6, separators having a three-layer structure were obtained according to the same method as in Example 12, and the resulting separators were evaluated.

<Comparative Examples 12 to 18>

Except that the raw materials and manufacturing conditions were changed as indicated in Table 7, separators having a three-layer structure were produced according to the same method as in Example 12, and the resulting separators were evaluated.

<Example 17>

[Production of microporous layer]

A high-molecular-weight polypropylene (PP, MFR (230 °C) = 0.51 g/10 min, density = 0.91 g/cm$^3$, Mw = 900000, Mw/Mn = 5.2, pentad fraction = 99.3%) as the polyolefin (A) was melted in a 2.5-inch extruder and fed using a T-die and a gear pump. The temperature of the T-die was set to 230 °C. The molten polymer was discharged from the T-die. Thereafter, the discharged polymer was cooled rapidly with air blown at 800 L/min cooled to 10 °C by a chiller while being wound into a roll at a roll speed of 25 m/min, whereby a precursor (X') (precursor of microporous layer (X)) having a thickness of about 6 μm was obtained. The lip width of the T-die in the TD was set to 500 mm, and the distance between lips of the T-die (lip clearance) was set to 2.4 mm. The molten polymer was discharged at a discharge rate of 3.8 kg/h.

Likewise, a polyethylene (PE, MFR (190 °C) = 0.38 g/10 min, density = 0.96 g/cm$^3$) as the polyolefin (B) was melted in a 2.5-inch extruder and fed to a T-die using a gear pump. The temperature of the T-die was set to 210 °C. The molten polymer was discharged from the T-die. Thereafter, the discharged polymer was cooled rapidly with air blown at 800 L/min cooled to 10 °C by a chiller while being wound into a roll at a roll speed of 25 m/min, whereby a precursor (Y') (precursor of microporous layer (Y)) having a thickness of about 6 μm was obtained. The lip width of the T-die in the TD was set to 500 mm, and the distance between lips of the T-die (lip clearance) was set to 2.4 mm. The molten polymer was discharged at a discharge rate of 3.8 kg/h.

The obtained precursor (X') and precursor (Y') were then subjected to a thermocompression bonding process using a thermocompression laminator at 120 °C and 4 m/min to form a precursor (X')/precursor (Y')/precursor (X'), whereby a precursor (Z) having a three-layer structure was obtained. The obtained precursor (Z) was then placed into a dryer and annealed at 120 °C for 1 h. Thereafter, the annealed precursor (Z) was cold-stretched by 8% at room temperature. The stretched film, without allowing shrinkage, was placed into an oven at 116 °C and hot-stretched to 185%. The hot-stretched film was then relaxed by 25% at 124 °C and further relaxed by 20% at 128 °C, whereby a separator having a three-layer structure composed of microporous layer (X)/microporous layer (Y)/microporous layer (X) was obtained. The structure, physical properties, and cell performance evaluation results of the resulting separator are shown in Table 8.

<Examples 18 to 21, Comparative Example 19, and Comparative Example 20>

Except that the raw materials were changed as indicated in Tables 8 and 9, microporous layers were obtained according to the same method as in Example 17, and the resulting separators were evaluated.

<Example 22>

Except that in the heat relaxation step, the hot-stretched film was relaxed by 15% at 124 °C in the first heat relaxation stage and by 10% at 128 °C in the second heat relaxation stage, a microporous layer was obtained according to the same method as in Example 17, and the microporous layer and a separator obtained using the microporous layer were evaluated.

<Example 23>

Except that in the heat relaxation step, the hot-stretched film was relaxed by 20% at 126 °C in the first heat relaxation stage and the second heat relaxation stage was not carried out, a microporous layer was obtained according to the same method as in Example 17, and the microporous layer and a separator obtained using the microporous layer were evaluated.

<Comparative Example 21>

The polyolefin raw material was changed as indicated in Table 9, and a film was formed by a coextrusion method instead of a lamination method. Specifically, the polypropylene indicated in Table 9 was melted in a 2.5-inch extruder at 220 °C, and the polyethylene described in Example 17 was melted at 200 °C. The polypropylene molten resin and the polyethylene molten resin were fed to a T-die (220 °C) for coextrusion at a discharge ratio of 1:1:1 so that a three-layer structure of polypropylene/polyethylene/polypropylene was formed, and the molten polymer was discharged from the die at 11.4 kg/h. The discharged resin was then wound into a roll at a roll speed of 25 m/min while cooled rapidly with blown air at 800 L/min cooled at 20 °C by a chiller to obtain a precursor (Z) (precursor of microporous layer (Z)) having a three-layer structure having a thickness of about 18 $\mu$m. The obtained precursor (Z) was placed into a dryer and annealed at 120 °C for 1 h. The annealed precursor (Z) was then cold-stretched by 8% at room temperature. The stretched film, without allowing shrinkage, was placed into an oven at 125 °C, hot-stretched to 150%, and then relaxed by 25%, whereby a separator having a three-layer structure composed of microporous layer (X)/microporous layer (Y)/microporous layer (X) was obtained. The structure, physical properties, and cell performance evaluation results of the resulting separator are shown in Table 9.

[Table 1]

Table 1 (Example A). Evaluation of single-layer separator (microporous layer (X))

| Item | Unit | Example | | | | |
|---|---|---|---|---|---|---|
| | | 1 | 2 | 3 | 4 | 5 |
| MFR of microporous layer (X) | g/10 min | 0.51 | 0.38 | 0.6 | 0.87 | 0.51 |
| Density of PP used in microporous layer (X) | g/cm$^3$ | 0.91 | 0.91 | 0.91 | 0.91 | 0.91 |
| Mw of PP used in microporous layer (X) | - | 900000 | 940000 | 920000 | 780000 | 900000 |
| Mw/Mn of PP used in microporous layer (X) | - | 5.2 | 5.3 | 5.9 | 5.8 | 5.2 |

(continued)

| Item | Unit | Example | | | | |
|---|---|---|---|---|---|---|
| | | 1 | 2 | 3 | 4 | 5 |
| Pentad fraction of PP used in microporous layer (X) | % | 99.3 | 97.9 | 95.8 | 97.1 | 99.3 |
| Melt tension of microporous layer (X) | mN | 26 | 29 | 29 | 20 | 26 |
| Extrusion temperature of PP | °C | 210 | 210 | 210 | 210 | 210 |
| Air volume during PP extrusion | L/min | 500 | 500 | 500 | 500 | 800 |
| Air temperature during PP extrusion | °C | 12 | 12 | 12 | 12 | 12 |
| Annealing temperature | °C | 130 | 130 | 130 | 130 | 130 |
| Annealing time | min | 20 | 20 | 20 | 20 | 180 |
| Separator thickness | $\mu$m | 14.2 | 14.0 | 14.3 | 14.1 | 14.5 |
| Porosity of separator | % | 49 | 48 | 50 | 48 | 52 |
| Air permeability resistance of separator (14 $\mu$m thickness conversion) | s/100 cm$^3$ | 152 | 186 | 148 | 160 | 133 |
| Puncture strength of separator (14 $\mu$m thickness conversion) | gf | 323 | 336 | 307 | 305 | 309 |
| SMD/STD | - | 16.3 | 16.5 | 15.9 | 15.8 | 16.6 |
| Average long pore diameter on MD-TD surface | nm | 115 | 105 | 121 | 108 | 268 |
| Maximum long pore diameter on MD-TD surface | nm | 265 | 253 | 273 | 257 | 649 |
| Cycle capacity retention rate | % | 80.0 | 76.0 | 81.0 | 78.0 | 85.0 |
| Clogging after cycle | - | No | No | No | No | No |

[Table 2]

Table 2 (Example A). Evaluation of single-layer separator (microporous layer (X))

| Item | Unit | Example | | | |
|---|---|---|---|---|---|
| | | 6 | 7 | 8 | 9 |
| MFR of microporous layer (X) | g/10 min | 0.51 | 0.38 | 0.6 | 0.51 |
| Density of PP used in microporous layer (X) | g/cm$^3$ | 0.91 | 0.91 | 0.91 | 0.91 |
| Mw of PP used in microporous layer (X) | - | 900000 | 940000 | 920000 | 900000 |
| Mw/Mn of PP used in microporous layer (X) | - | 5.2 | 5.3 | 5.9 | 5.2 |
| Pentad fraction of PP used in microporous layer (X) | % | 99.3 | 97.9 | 95.8 | 99.3 |
| Melt tension of microporous layer (X) | mN | 26 | 29 | 29 | 26 |
| Extrusion temperature of PP | °C | 210 | 210 | 210 | 210 |
| Air volume during PP extrusion | L/min | 600 | 600 | 600 | 700 |
| Air temperature during PP extrusion | °C | 12 | 12 | 12 | 12 |
| Annealing temperature | °C | 130 | 130 | 130 | 130 |
| Annealing time | min | 60 | 60 | 60 | 60 |

(continued)

| Item | Unit | Example | | | |
|---|---|---|---|---|---|
| | | 6 | 7 | 8 | 9 |
| Separator thickness | μm | 14.1 | 14.1 | 14.2 | 14.4 |
| Porosity of separator | % | 50 | 50 | 51 | 52 |
| Air permeability resistance of separator (14 μm thickness conversion) | s/100 cm$^3$ | 149 | 170 | 151 | 144 |
| Puncture strength of separator (14 μm thickness conversion) | gf | 334 | 342 | 322 | 320 |
| SMD/STD | - | 16.5 | 16.0 | 16.2 | 16.2 |
| Average long pore diameter on MD-TD surface | nm | 148 | 139 | 162 | 186 |
| Maximum long pore diameter on MD-TD surface | nm | - | - | - | - |
| Average long pore diameter in ND-MD cross-section | nm | 144 | 142 | 168 | 179 |
| Cycle capacity retention rate | % | 81.3 | 82.1 | 82.2 | 84.3 |
| Clogging after cycle | - | No | No | No | No |

[Table 3]

Table 3 (Example A). Evaluation of single-layer separator (microporous layer (X))

| Item | Unit | Example | |
|---|---|---|---|
| | | 10 | 11 |
| MFR of microporous layer (X) | g/10 min | 0.25 | 0.87 |
| Density of PP used in microporous layer (X) | g/cm$^3$ | 0.91 | 0.91 |
| Mw of PP used in microporous layer (X) | - | 980000 | 780000 |
| Mw/Mn of PP used in microporous layer (X) | - | 5.5 | 5.8 |
| Pentad fraction of PP used in microporous layer (X) | % | 97.5 | 97.1 |
| Melt tension of microporous layer (X) | mN | 36 | 17 |
| Extrusion temperature of PP | °C | 220 | 210 |
| Air volume during PP extrusion | L/min | 700 | 500 |
| Air temperature during PP extrusion | °C | 12 | 12 |
| Annealing temperature | °C | 130 | 130 |
| Annealing time | min | 120 | 20 |
| Separator thickness | μm | 14.0 | 14.8 |
| Porosity of separator | % | 49 | 54 |
| Air permeability resistance of separator (14 μm thickness conversion) | s/100 cm$^3$ | 192 | 136 |
| Puncture strength of separator (14 μm thickness conversion) | gf | 358 | 303 |
| SMD/STD | - | 17.2 | 15.6 |
| Average long pore diameter on MD-TD surface | nm | 108 | 338 |
| Maximum long pore diameter on MD-TD surface | nm | - | - |

(continued)

| Item | Unit | Example | |
|---|---|---|---|
| | | 10 | 11 |
| Average long pore diameter in ND-MD cross-section | nm | 112 | 317 |
| Cycle capacity retention rate | % | 76.6 | 75.4 |
| Clogging after cycle | - | No | No |

[Table 4]

Table 4 (Example A). Evaluation of single-layer separator (microporous layer (X))

| Item | Unit | Comparative Example | | | | | | |
|---|---|---|---|---|---|---|---|---|
| | | 1 | 2 | 3 | 4 | 5 | 6 | 7 |
| MFR of microporous layer (X) | g/10 min | 0.48 | 0.93 | 0.51 | 0.51 | 0.51 | 0.51 | 0.51 |
| Density of PP used in microporous layer (X) | g/cm$^3$ | 0.91 | 0.91 | 0.91 | 0.91 | 0.91 | 0.91 | 0.91 |
| Mw of PP used in microporous layer (X) | - | 910000 | 720000 | 900000 | 900000 | 900000 | 900000 | 900000 |
| Mw/Mn of PP used in microporous layer (X) | - | 5.5 | 5.5 | 5.2 | 5.2 | 5.2 | 5.2 | 5.2 |
| Pentad fraction of PP used in microporous layer (X) | % | 93.8 | 90.3 | 99.3 | 99.3 | 99.3 | 99.3 | 99.3 |
| Melt tension of microporous layer (X) | mN | 27 | 15 | 26 | 26 | 26 | 26 | 26 |
| Extrusion temperature of PP | °C | 210 | 210 | 260 | 210 | 210 | 210 | 210 |
| Air volume during PP extrusion | L/min | 500 | 500 | 500 | 200 | 400 | 400 | 400 |
| Air temperature during PP extrusion | °C | 12 | 12 | 12 | 25 | 60 | 25 | 25 |
| Annealing temperature | °C | 130 | 130 | 130 | 130 | 130 | 110 | 130 |
| Annealing time | min | 20 | 20 | 20 | 20 | 20 | 20 | 5 |
| Separator thickness | μm | 13.8 | 13.9 | 13.6 | 13.7 | 13.9 | 13.5 | 13.6 |
| Porosity of separator | % | 45 | 46 | 43 | 44 | 46 | 40 | 41 |
| Air permeability resistance of separator (14 μm thickness conversion) | s/100 3 cm | 236 | 242 | 255 | 251 | 249 | 283 | 275 |
| Puncture strength of separator (14 μm thickness conversion) | gf | 328 | 293 | 326 | 317 | 331 | 311 | 315 |
| SMD/STD | - | 16 | 15.2 | 14.2 | 13.9 | 15 | 14.6 | 14.9 |
| Average long pore diameter on MD-TD surface | nm | 93 | 97 | 91 | 92 | 97 | 89 | 89 |

(continued)

| Item | Unit | Comparative Example | | | | | | |
|---|---|---|---|---|---|---|---|---|
| | | 1 | 2 | 3 | 4 | 5 | 6 | 7 |
| Maximum long pore diameter on MD-TD surface | nm | 239 | 248 | 238 | 241 | 248 | 248 | 249 |
| Average long pore diameter in ND-MD cross-section | nm | 89 | 92 | 88 | 90 | 92 | 85 | 87 |
| Cycle capacity retention rate | % | 61 | 69 | 58 | 63 | 70 | 49 | 55 |
| Clogging after cycle | - | Yes | Yes | Yes | Yes | Yes | Yes | Yes |

[Table 5]

Table 5 (Example A). Evaluation of single-layer separator (microporous layer (X))

| Item | Unit | Comparative Example | | | |
|---|---|---|---|---|---|
| | | 8 | 9 | 10 | 11 |
| MFR of microporous layer (X) | g/10 min | 0.93 | 1.1 | 1.4 | 0.93 |
| Density of PP used in microporous layer (X) | g/cm$^3$ | 0.91 | 0.91 | 0.91 | 0.91 |
| Mw of PP used in microporous layer (X) | - | 720000 | 710000 | 660000 | 720000 |
| Mw/Mn of PP used in microporous layer (X) | - | 5.5 | 9.4 | 7.4 | 5.2 |
| Pentad fraction of PP used in microporous layer (X) | % | 90.3 | - | - | 90.3 |
| Melt tension of microporous layer (X) | mN | 15 | 14 | 9 | 15 |
| Extrusion temperature of PP | °C | 210 | 210 | 210 | 210 |
| Air volume during PP extrusion | L/min | 600 | 600 | 600 | 1000 |
| Air temperature during PP extrusion | °C | 12 | 12 | 12 | 12 |
| Annealing temperature | °C | 130 | 130 | 130 | 140 |
| Annealing time | min | 60 | 60 | 60 | 180 |
| Separator thickness | μm | 14.4 | 14.3 | 14.6 | 14.9 |
| Porosity of separator | % | 50 | 51 | 51 | 54 |
| Air permeability resistance of separator (14 μm thickness conversion) | s/100 cm$^3$ | 193 | 187 | 185 | 175 |
| Puncture strength of separator (14 μm thickness conversion) | gf | 274 | 257 | 251 | 254 |
| SMD/STD | - | 15.8 | 14.9 | 15.4 | 14.8 |
| Average long pore diameter on MD-TD surface | nm | 124 | 135 | 142 | 418 |
| Maximum long pore diameter on MD-TD surface | nm | - | - | - | - |
| Average long pore diameter in ND-MD cross-section | nm | 117 | 126 | 136 | 412 |
| Cycle capacity retention rate | % | 76.8 | 76.4 | 76.7 | 41.0 |
| Clogging after cycle | - | No | No | No | No |

[Table 6]

Table 6 (Example A). Evaluation of PP/PE/PP three-layer separator (microporous layer (X)/microporous layer (Y)/ microporous layer (X))

| Item | Unit | Example | | | | |
|---|---|---|---|---|---|---|
| | | 12 | 13 | 14 | 15 | 16 |
| MFR of microporous layer (X) | g/10 min | 0.51 | 0.38 | 0.6 | 0.87 | 0.51 |
| Density of PP used in microporous layer (X) | g/cm$^3$ | 0.91 | 0.91 | 0.91 | 0.91 | 0.91 |
| Mw of PP used in microporous layer (X) | - | 900000 | 940000 | 920000 | 780000 | 900000 |
| Mw/Mn of PP used in microporous layer (X) | - | 5.2 | 5.3 | 5.9 | 5.8 | 5.2 |
| Pentad fraction of PP used in microporous layer (X) | % | 99.3 | 97.9 | 95.8 | 97.1 | 99.3 |
| Melt tension of microporous layer (X) | mN | 26 | 29 | 29 | 20 | 26 |
| Extrusion temperature of PP | °C | 230 | 230 | 230 | 230 | 230 |
| Air volume during PP extrusion | L/min | 500 | 500 | 500 | 500 | 800 |
| Air temperature during PP extrusion | °C | 12 | 12 | 12 | 12 | 12 |
| Annealing temperature | °C | 125 | 125 | 125 | 125 | 125 |
| Annealing time | min | 20 | 20 | 20 | 20 | 180 |
| Separator thickness | μm | 14.2 | 14 | 14.2 | 14.1 | 14.3 |
| Porosity of separator | % | 50 | 48 | 52 | 49 | 55 |
| Air permeability resistance of separator (14 μm thickness conversion) | s/100 cm$^3$ | 169 | 174 | 162 | 175 | 143 |
| Puncture strength of separator (14 μm thickness conversion) | gf | 358 | 363 | 319 | 311 | 347 |
| SMD/STD | - | 15.1 | 15.5 | 14.5 | 14.3 | 15.3 |
| Average long pore diameter on MD-TD surface of microporous layer (X) | nm | 109 | 107 | 118 | 108 | 237 |
| Maximum long pore diameter on MD-TD surface of microporous (X) | nm | 257 | 256 | 271 | 253 | 620 |
| Average long pore diameter in ND-MD cross-section of microporous layer (X) | nm | 107 | 106 | 114 | 105 | 223 |
| Average long pore diameter in ND-MD cross-section of microporous layer (Y) | nm | 348 | 357 | 367 | 364 | 467 |
| Cycle capacity retention rate | % | 84 | 83 | 86 | 81 | 87 |
| Clogging after cycle | - | No | No | No | No | No |

[Table 7]

Table 7 (Example A). Evaluation of PP/PE/PP three-layer separator (microporous layer (X)/microporous layer (Y)/ microporous layer (X))

| Item | Unit | Comparative Example | | | | | | |
|---|---|---|---|---|---|---|---|---|
| | | 12 | 13 | 14 | 15 | 16 | 17 | 18 |
| MFR of microporous layer (X) | g/10 min | 0.48 | 0.93 | 0.51 | 0.51 | 0.51 | 0.51 | 0.51 |
| Density of PP used in microporous layer (X) | g/cm$^3$ | 0.91 | 0.91 | 0.91 | 0.91 | 0.91 | 0.91 | 0.91 |
| Mw of PP used in microporous layer (X) | - | 910000 | 720000 | 900000 | 900000 | 900000 | 900000 | 900000 |
| Mw/Mn of PP used in microporous layer (X) | - | 5.5 | 5.5 | 5.2 | 5.2 | 5.2 | 5.2 | 5.2 |
| Pentad fraction of PP used in microporous layer (X) | % | 93.8 | 90.3 | 99.3 | 99.3 | 99.3 | 99.3 | 99.3 |
| Melt tension of microporous layer (X) | mN | 27 | 15 | 26 | 26 | 26 | 26 | 26 |
| Extrusion temperature of PP | °C | 210 | 210 | 260 | 210 | 210 | 210 | 210 |
| Air volume during PP extrusion | L/min | 500 | 500 | 500 | 200 | 500 | 500 | 500 |
| Air temperature during PP extrusion | °C | 12 | 12 | 12 | 12 | 60 | 12 | 12 |
| Annealing temperature | °C | 125 | 125 | 125 | 125 | 125 | 110 | 125 |
| Annealing time | min | 20 | 20 | 20 | 20 | 20 | 20 | 5 |
| Separator thickness | μm | 14 | 14.1 | 13.9 | 14 | 14.1 | 13.8 | 13.7 |
| Porosity of separator | % | 46 | 46 | 45 | 45 | 45 | 42 | 43 |
| Air permeability resistance of separator (14 μm thickness conversion) | s/100 3 cm | 253 | 245 | 193 | 256 | 250 | 288 | 285 |
| Puncture strength of separator (14 μm thickness conversion) | gf | 320 | 294 | 331 | 328 | 325 | 316 | 320 |
| SMD/STD | - | 15 | 14.6 | 14.9 | 15.1 | 15.3 | 14.7 | 14.9 |
| Average long pore diameter on MD-TD surface of microporous layer (X) | nm | 96 | 97 | 98 | 96 | 97 | 92 | 91 |
| Maximum long pore diameter on MD-TD surface of microporous (X) | nm | 243 | 241 | 239 | 247 | 240 | 233 | 229 |

(continued)

| Item | Unit | Comparative Example | | | | | | |
|---|---|---|---|---|---|---|---|---|
| | | 12 | 13 | 14 | 15 | 16 | 17 | 18 |
| Average long pore diameter in ND-MD cross-section of microporous layer (X) | nm | 94 | 94 | 96 | 95 | 95 | 89 | 87 |
| Average long pore diameter in ND-MD cross-section of microporous layer (Y) | nm | 347 | 351 | 353 | 352 | 364 | 347 | 341 |
| Cycle capacity retention rate | % | 69 | 65 | 65 | 61 | 68 | 53 | 49 |
| Clogging after cycle | - | Yes | Yes | Yes | Yes | Yes | Yes | Yes |

[Table 8]

Table 8 (Example A). Evaluation of PP/PE/PP three-layer separator (microporous layer (X)/microporous layer (Y)/ microporous layer (X))

| Item | Unit | Example | | | | | |
|---|---|---|---|---|---|---|---|
| | | 17 | 18 | 19 | 20 | 21 | 22 |
| MFR of microporous layer (X) | g/10 min | 0.51 | 0.38 | 0.35 | 0.60 | 0.83 | 0.51 |
| Mw of PP used in microporous layer (X) | - | 900000 | 940000 | 960000 | 920000 | 740000 | 900000 |
| Mw/Mn of PP used in microporous layer (X) | - | 5.2 | 5.3 | 4.9 | 5.9 | 6.0 | 5.2 |
| Pentad fraction of PP used in microporous layer (X) | % | 99.3 | 97.9 | 98.3 | 94.8 | 90.1 | 99.3 |
| Melt tension of microporous layer (X) | mN | 26 | 29 | 29 | 29 | 17 | 26 |
| Separator thickness | μm | 15.8 | 15.4 | 15.5 | 15.7 | 16.1 | 15.9 |
| Porosity of separator | % | 54.7 | 52.7 | 52.9 | 54.4 | 55.6 | 55.5 |
| Average long pore diameter on MD-TD surface of microporous layer (X) | nm | 174 | 129 | 137 | 142 | 167 | 181 |
| Average long pore diameter in ND-MD cross-section of microporous layer (X) | nm | 172 | 123 | 133 | 135 | 168 | 175 |
| Average long pore diameter in ND-MD cross-section of microporous layer (Y) | nm | 395 | 368 | 378 | 365 | 384 | 387 |
| Air permeability resistance of separator (14 μm thickness conversion) | s/100 3 cm | 139 | 154 | 157 | 167 | 164 | 142 |

(continued)

| Item | Unit | Example | | | | | |
|---|---|---|---|---|---|---|---|
| | | 17 | 18 | 19 | 20 | 21 | 22 |
| Puncture strength (14 $\mu$m thickness conversion) | gf | 312 | 310 | 308 | 298 | 252 | 321 |
| MD heat shrinkage rate at 105 °C for 1 h | % | 2.3 | 2.2 | 2.2 | 2.4 | 3.8 | 3.7 |
| MD heat shrinkage rate at 105 °C for 2 h | % | 2.4 | 2.2 | 2.3 | 2.4 | 3.8 | 3.8 |
| TD heat shrinkage rate at 105 °C for 1 h | % | 0.0 | 0.0 | 0.1 | 0.1 | 0.0 | 0.1 |
| MD heat shrinkage rate at 120 °C for 1 h | % | 6.8 | 6.6 | 6.7 | 6.9 | 9.8 | 9.4 |
| MD heat shrinkage rate at 120 °C for 2 h | % | 6.8 | 6.7 | 6.7 | 6.9 | 9.8 | 9.5 |
| TD heat shrinkage rate at 120 °C for 1 h | % | 0.1 | 0.1 | 0.1 | 0.0 | 0.1 | 0.1 |
| Short-circuit temperature in lithium-ion secondary cell | °C | 130 | 130 | 130 | 130 | 125 | 125 |

[Table 9]

Table 9 (Example A). Evaluation of PP/PE/PP three-layer separator (microporous layer (X)/microporous layer (Y)/ microporous layer (X))

| Item | Unit | Example | Comparative Example | | |
|---|---|---|---|---|---|
| | | 23 | 19 | 20 | 21 |
| MFR of microporous layer (X) | g/10 min | 0.51 | 1.1 | 1.4 | 0.53 |
| Mw of PP used in microporous layer (X) | - | 900000 | 710000 | 660000 | 970000 |
| Mw/Mn of PP used in microporous layer (X) | - | 5.2 | 9.4 | 7.4 | 7.5 |
| Pentad fraction of PP used in microporous layer (X) | % | 99.3 | 91.2 | 92.8 | 95.3 |
| Melt tension of microporous layer (X) | mN | 26 | 14 | 9 | 39 |
| Separator thickness | $\mu$m | 15.8 | 16.2 | 16.1 | 15.8 |
| Porosity of separator | % | 55.6 | 51.9 | 51.7 | 50.4 |
| Average long pore diameter on MD-TD surface of microporous layer (X) | nm | 178 | 146 | 137 | 71 |
| Average long pore diameter in ND-MD cross-section of microporous layer (X) | nm | 169 | 142 | 132 | 68 |
| Average long pore diameter in ND-MD cross-section of microporous layer (Y) | nm | 378 | 358 | 336 | 337 |
| Air permeability resistance of separator (14 $\mu$m thickness conversion) | s/100 cm$^3$ | 147 | 214 | 224 | 221 |
| Puncture strength (14 $\mu$m thickness conversion) | gf | 314 | 218 | 207 | 287 |

(continued)

| Item | Unit | Example | Comparative Example | | |
|---|---|---|---|---|---|
| | | 23 | 19 | 20 | 21 |
| MD heat shrinkage rate at 105 °C for 1 h | % | 4.4 | 4.2 | 5.4 | 4.4 |
| MD heat shrinkage rate at 105 °C for 2 h | % | 4.4 | 4.3 | 5.4 | 4.5 |
| TD heat shrinkage rate at 105 °C for 1 h | % | 0.1 | 0.0 | 0.0 | 0.0 |
| MD heat shrinkage rate at 120 °C for 1 h | % | 9.8 | 11.4 | 12.1 | 9.5 |
| MD heat shrinkage rate at 120 °C for 2 h | % | 9.7 | 11.4 | 12.1 | 9.5 |
| TD heat shrinkage rate at 120 °C for 1 h | % | 0.1 | 0.0 | 0.1 | 0.1 |
| Short-circuit temperature in lithium-ion secondary cell | °C | 120 | 115 | 115 | 120 |

(2) Example B (first aspect)

<Example 1>

[Production of microporous layer]

A high-molecular-weight polypropylene resin (PP, MFR (230 °C) = 0.51 g/10 min, density = 0.91 g/cm$^3$, Mw/Mn = 5.2, pentad fraction = 99.3%) as the polyolefin (A) was melted in a 2.5-inch extruder and fed to a T-die using a gear pump. The temperature of the T-die was set to 230 °C. The molten polymer was discharged from the T-die. Thereafter, the discharged polymer was cooled rapidly with air blown at 800 L/min cooled to 10 °C by a chiller while being wound into a roll at a roll speed of 25 m/min, whereby a precursor (X') (precursor of microporous layer (X)) having a thickness of about 6 $\mu$m was obtained. The lip width of the T-die in the TD was set to 500 mm, and the distance between lips of the T-die (lip clearance) was set to 2.4 mm. The molten polymer was discharged at a discharge rate of 3.8 kg/h.

Likewise, a polyethylene resin (PE, MFR (190 °C) = 0.38 g/10 min, density = 0.96 g/cm$^3$) as the polyolefin (B) was melted in a 2.5-inch extruder and fed to a T-die using a gear pump. The temperature of the T-die was set to 210 °C. The molten polymer was discharged from the T-die. Thereafter, the discharged polymer was cooled rapidly with air blown at 800 L/min cooled to 10 °C by a chiller while being wound into a roll at a roll speed of 25 m/min, whereby a precursor (Y') (precursor of microporous layer (Y)) having a thickness of about 6 $\mu$m was obtained. The lip width of the T-die in the TD was set to 500 mm, and the distance between lips of the T-die (lip clearance) was set to 2.4 mm. The molten polymer was discharged at a discharge rate of 3.8 kg/h.

The obtained precursor (X') and precursor (Y') were then subjected to a thermocompression bonding process using a thermocompression laminator at 120 °C and 4 m/min to form a precursor (X')/precursor (Y')/precursor (X'), whereby a precursor (Z) having a three-layer structure was obtained. The obtained precursor (Z) was then placed into a dryer and annealed at 120 °C for 1 h. Thereafter, the annealed precursor (Z) was cold-stretched by 8% at room temperature. The stretched film, without allowing shrinkage, was placed into an oven at 125 °C and hot-stretched to 140%. The hot-stretched film was then relaxed by 15%, whereby a separator having a three-layer structure composed of microporous layer (X)/microporous layer (Y)/microporous layer (X) was obtained. The structure, physical properties, and cell performance evaluation results of the resulting separator are shown in Table 10.

<Example 2, Example 3, Example 6, Comparative Example 1, and Comparative Example 3>

Except that the raw materials were changed as indicated in Table 10, microporous layers were obtained according to the same method as in Example 1, and the microporous layers and the separators obtained using the microporous layers were evaluated.

<Example 4>

The raw material was changed as indicated in Table 10. In the film formation of a precursor (X'), the temperature of blown air was changed to 25 °C and the volume of blown air was changed to 600 L/min to form a film to obtain the precursor (X'). Other conditions are the same as those described in Example 1.

<Example 5 >

The raw material was changed as indicated in Table 10. In the film formation of a precursor (X'), the temperature of blown air was changed to 0 °C and the volume of blown air was changed to 1000 L/min to form a film to obtain the precursor (X'). Further, in the annealing step of Example 5, an annealing treatment was carried out at 125 °C for 3 h. Other conditions are the same as those described in Example 1.

<Comparative Example 4>

A high-molecular-weight polypropylene resin (PP, MFR (230 °C) = 0.25 g/10 min, density = 0.91 g/cm$^3$, Mw/Mn = 5.0, pentad fraction = 97.5%) as the polyolefin (A) was melted in a 2.5-inch extruder and fed to a T-die using a gear pump. The temperature of the T-die was set to 230 °C. The molten polymer was discharged from the T-die. Thereafter, the discharged polymer was cooled rapidly with air blown at 800 L/min cooled to 10 °C by a chiller while being wound into a roll at a roll speed of 25 m/min, whereby a precursor (X') (precursor of microporous layer (X)) having a thickness of about 6 $\mu$m was obtained. The lip width of the T-die in the TD was set to 500 mm, and the distance between lips of the T-die (lip clearance) was set to 2.4 mm. The molten polymer was discharged at a discharge rate of 3.8 kg/h.
Likewise, a high-molecular-weight polypropylene resin (PP, MFR (230 °C) = 0.25 g/10 min, density = 0.91 g/cm$^3$, Mw/Mn = 5.0, pentad fraction = 97.5%) as the polyolefin (B) was melted in a 2.5-inch extruder and fed to a T-die using a gear pump. The temperature of the T-die was set to 230 °C. The molten polymer was discharged from the T-die. Thereafter, the discharged polymer was cooled rapidly with air blown at 800 L/min cooled to 10 °C by a chiller while being wound into a roll at a roll speed of 25 m/min, whereby a precursor (Y') (precursor of microporous layer (Y)) having a thickness of about 6 $\mu$m was obtained. The lip width of the T-die in the TD was set to 500 mm, and the distance between lips of the T-die (lip clearance) was set to 2.4 mm. The molten polymer was discharged at a discharge rate of 3.8 kg/h.
The obtained precursor (X') and precursor (Y') were then subjected to a thermocompression bonding process using a thermocompression laminator at 135 °C and 2 m/min to form a precursor (X')/precursor (Y')/precursor (X'), whereby a precursor (Z) having a three-layer structure was obtained. The obtained precursor (Z) was then placed into a dryer and annealed at 120 °C for 1 h. Thereafter, the annealed precursor (Z) was cold-stretched by 8% at room temperature. The stretched film, without allowing shrinkage, was placed into an oven at 125 °C and hot-stretched to 140%. The hot-stretched film was then relaxed by 15%, whereby a separator having a three-layer structure composed of microporous layer (X)/microporous layer (Y)/microporous layer (X) was obtained. The structure, physical properties, and cell performance evaluation results of the resulting separator are shown in Table 1.

<Comparative Example 2>

The raw material was changed as indicated in Table 10, and a film was formed by a coextrusion method instead of a lamination method. Specifically, using a 2.5-inch extruder, the polypropylene indicated in Table 10 was melted at 220 °C, and the polyethylene indicated in Table 10 was melted at 200 °C. The polypropylene molten resin and the polyethylene molten resin were fed to a T-die (220 °C) for coextrusion at a discharge ratio of 1:1:1 so that a three-layer structure of polypropylene resin/polyethylene resin/polypropylene resin was formed, and the molten polymer was discharged from the die at 11.4 kg/h. The discharged resin was then wound into a roll at a roll speed of 25 m/min while cooled rapidly with blown air at 800 L/min cooled at 10 °C by a chiller to obtain a precursor (Z) (precursor of microporous layer (Z)) having a three-layer structure having a thickness of about 16 $\mu$m. The obtained precursor (Z) was placed into a dryer and annealed at 120 °C for 1 h. The annealed precursor (Z) was then cold-stretched by 8% at room temperature. The stretched film, without allowing shrinkage, was placed into an oven at 125 °C, hot-stretched to 140%, and then relaxed by 15%, whereby a separator having a three-layer structure composed of microporous layer (X)/microporous layer (Y)/microporous layer (X) was obtained. The structure, physical properties, and cell performance evaluation results of the resulting separator are shown in Table 10.
From Table 10, using a polyolefin resin having an MFR of 0.9 g/10 min or less at a load of 2.16 kg and a temperature of 230 °C for the microporous layer (X), it was found that a separator having a sufficiently large average long pore diameter, a sufficiently low air permeability, and high puncture strength can be produced by strictly controlling film-forming conditions. Further, it was found that clogging of a separator within a lithium-ion secondary cell is suppressed and cycle performance is improved by using a separator having a sufficiently average long pore diameter and a sufficient ratio of average long pore diameters between the microporous layer (X) and the microporous layer (Y).

[Table 10]

Table 10 (Example B). Evaluation of three-layer separator

| Item | Unit | Example 1 | Example 2 | Example 3 | Example 4 | Example 5 | Example 6 | Comparative Example 1 | Comparative Example 2 | Comparative Example 3 | Comparative Example 4 |
|---|---|---|---|---|---|---|---|---|---|---|---|
| Separator configuration | | Three-layer (X-Y-X) | Three-layer (X-Y-X) | Three-layer (X-Y-X) | Three-layer (X-Y-X) | Three-layer (X-Y-X) | Three-layer (X-Y-X) | Three-layer (X-Y-X) | Three-layer (X-Y-X) | Three-layer (X-Y-X) | Three-layer (X-Y-X) |
| Separator thickness | $\mu$m | 15.8 | 15.8 | 15.8 | 15.7 | 15.9 | 15.6 | 15.2 | 15.9 | 16.2 | 15.6 |
| Separator porosity | % | 54.9 | 56.5 | 53.7 | 52.7 | 52.7 | 52.2 | 48.5 | 54.1 | 53.9 | 48.4 |

(continued)

| Item | | Unit | Example 1 | Example 2 | Example 3 | Example 4 | Example 5 | Example 6 | Comparative Example 1 | Comparative Example 2 | Comparative Example 3 | Comparative Example 4 |
|---|---|---|---|---|---|---|---|---|---|---|---|---|
| Microporous layer (X) | Polyolefin (A) | | PP | PP | PP | PP | PP | PP | PP | PP | PP | PP |
| | MFR | g/10 min | 0.51 | 0.7 | 0.38 | 0.51 | 0.51 | 0.83 | 0.25 | 0.53 | 1.4 | 0.25 |
| | Pentad fraction | % | 99.3 | 99.1 | 97.9 | 99.3 | 99.3 | 90.1 | 97.5 | 95.3 | 91.1 | 97.5 |
| | Melt tension | mN | 26 | 25 | 29 | 26 | 26 | 17 | 40 | 33 | 9 | 40 |
| | Weight average molecular weight (Mw) | | 900000 | 830000 | 940000 | 900000 | 900000 | 740000 | 1100000 | 900000 | 660000 | 1100000 |
| | Molecular weight distribution (Mw/Mn) | | 5.2 | 6.5 | 5.3 | 5.2 | 5.2 | 6.0 | 5.0 | 7.7 | 7.4 | 5.0 |
| | Thickness | $\mu$m | 5.1 | 5.1 | 5.1 | 5.1 | 5.1 | 5.0 | 5.1 | 5.3 | 5.3 | 5.2 |
| | Porosity | % | 52.1 | 54.2 | 50.9 | 50.1 | 53.0 | 49.5 | 48.1 | 51.9 | 52.0 | 48.4 |
| | Average long pore diameter on MD-TD surface | nm | 187 | 223 | 142 | 154 | 196 | 117 | 94 | 75 | 128 | 95 |
| | Average long pore diameter in ND-MD cross-section | nm | 183 | 218 | 138 | 154 | 192 | 114 | 92 | 74 | 127 | 96 |

| Item | | Unit | Example 1 | Example 2 | Example 3 | Example 4 | Example 5 | Example 6 | Comparative Example 1 | Comparative Example 2 | Comparative Example 3 | Comparative Example 4 |
|---|---|---|---|---|---|---|---|---|---|---|---|---|
| Microporous layer (Y) | Polyolefin (B) | | PE | PE | PE | PE | PE | PE | PE | PE | PE | PP |
| | MFR | g/10 min | 0.38 | 0.38 | 0.38 | 0.38 | 0.38 | 0.38 | 0.38 | 0.38 | 0.38 | 0.25 |
| | Thickness | μm | 5.6 | 5.6 | 5.6 | 5.5 | 5.7 | 5.6 | 5 | 5.3 | 5.6 | 5.2 |
| | Porosity | % | 60.4 | 61.1 | 59.2 | 57.8 | 52.1 | 57.7 | 49.4 | 58.5 | 57.6 | 48.5 |
| | Average long pore diameter in ND-MD cross-section | nm | 312 | 320 | 287 | 279 | 338 | 277 | 262 | 307 | 294 | 98 |
| | Long pore diameter ratio of Y to X | | 1.70 | 1.47 | 2.08 | 1.81 | 1.76 | 2.43 | 2.85 | 4.15 | 2.31 | 1.02 |
| Separator physical property | Air permeability with 16 μm thickness conversion | s/100 3 cm | 155 | 140 | 175 | 194 | 147 | 203 | 345 | 254 | 223 | 357 |
| | Puncture strength with 16 μm thickness conversion | g f | 354 | 321 | 352 | 370 | 351 | 307 | 346 | 297 | 254 | 350 |
| | Cycle capacity retention rate | % | 79 | 80 | 75 | 78 | 79 | 71 | 46 | 37 | 72 | 38 |
| | Clogging | Visual | No | No | No | No | No | No | Yes | Yes | No | Yes |

(3) Example C (second aspect)

<Example 1>

[Production of separator including microporous layer]

A high-molecular-weight polypropylene resin (PP, MFR (230 °C) = 0.51 g/10 min, density = 0.91 g/cm$^3$, Mw = 900000, Mw/Mn = 5.2, pentad fraction = 99.3%) was melted in a 2.5-inch extruder and fed using a T-die adjusted to a die width of 500 mm and a die lip clearance of 2.0 mm and a gear pump. The temperature of the T-die was set to 230 °C. The molten polymer was discharged from the T-die, and then sufficiently cooled with blown air having an air volume of 400 L/min at 25 °C and wound into a roll. Likewise, a polyethylene (PE, MFR (190 °C) = 0.38 g/10 min, density = 0.96 g/cm$^3$) was melted in a 2.5-inch extruder and fed using a T-die adjusted to a die lip width of 2.0 mm and a gear pump. The temperature of the T-die was set to 210 °C. The molten polymer was discharged from the T-die, and then sufficiently cooled with blown air having an air volume of 400 L/min at 25 °C and wound into a roll. The PP starting film and the PE starting film wound into rolls each had a thickness of 6 μm and a draw ratio of 330. The PP starting film and the PE starting film were bound into the form of PP/PE/PP to obtain a starting film having a three-layer structure of PP/PE/PP. The starting film having the three-layer structure was then annealed at 126 °C for 20 min. The annealed starting film was cold-stretched to 8% at room temperature, then hot-stretched by 185% at 116 °C, and heat-relaxed by 45% at 126 °C to form micropores, whereby a separator having a PP/PE/PP three-layer structure was obtained. The hot-stretching and heat relaxation speeds were about 10%/min. After the above stretch porosification, the measurement of air permeability, puncture strength, and heat shrinkage rate at 105 °C and fuse short-circuit testing were carried out on the obtained three-layer-structure separator. The results are shown in Table 11.

<Examples 2 to 5>

Except that the raw materials and the shrinkage rate in heat relaxation were changed as indicated in Tables 11 and 12, separators having a microporous layer were obtained according to the same method as in Example 1, and the resulting separators were evaluated.

<Comparative Examples 1 to 4>

Except that the raw materials and the shrinkage rate in heat relaxation were changed as indicated in Table 12, separators comprising a microporous layer were produced according to the same method as in Example 1, and the separators were evaluated. However, samples in which PP starting films having a thickness of 6 μm could not be produced due to excessively high melt tension were designated as not possible to produce.

<Example 6>

A high-molecular-weight polypropylene resin (PP, MFR (230 °C) = 0.51 g/10 min, density = 0.91 g/cm$^3$, Mw = 900000, Mw/Mn = 5.2, pentad fraction = 99.3%) was melted in a 2.5-inch extruder and fed using a T-die adjusted to a die width of 500 mm and a die lip clearance of 3.3 mm and a gear pump. The temperature of the T-die was set to 230 °C. The molten polymer was discharged from the T-die, and the discharged resin was then sufficiently cooled with blown air having an air volume of 400 L/min at 25 °C and wound into a roll. The PP starting film wound into a roll had a thickness of 15 μm and a draw ratio of 220. The starting film having a three-layer structure was then annealed at 130 °C for 20 min. The annealed starting film was cold-stretched to 10% at room temperature, then hot-stretched by 185% at 130 °C, and heat-relaxed by 45% at 130 °C to form micropores, whereby a separator composed of a microporous layer having a PP single-layer structure was obtained. After the above stretch porosification, the measurement of air permeability, puncture strength, and heat shrinkage rate at 105 °C and fuse short-circuit testing were carried out on the obtained three-layer-structure separator. The results are shown in Table 13.

<Comparative Example 5>

Except that the raw materials were changed as indicated in Table 13, a separator comprising a microporous layer was obtained according to the same method as in Example 6, and the resulting separator was evaluated.

[Table 11]

Table 11 (Example C). Evaluation of PP/PE/PP three-layer separator

| Item | | Unit | Example | | | | |
|---|---|---|---|---|---|---|---|
| | | | 1 | 2 | 3 | 4 | 5 |
| MFR of PP layer | | g/10 min | 0.51 | 0.38 | 0.35 | 0.6 | 0.51 |
| Density of PP | | g/cm$^3$ | 0.91 | 0.91 | 0.91 | 0.91 | 0.91 |
| Mw of PP | | - | 900000 | 940000 | 960000 | 920000 | 900000 |
| Mw/Mn of PP | | - | 5.2 | 5.3 | 4.9 | 5.9 | 5.2 |
| Pentad fraction of PP | | % | 99.3 | 97.9 | 98.3 | 94.8 | 99.3 |
| Melt tension of PP layer | | mN | 26 | 29 | 30 | 29 | 26 |
| MD/TD orientation ratio | | - | 5.5 | 4.8 | 5.2 | 6.1 | 5.5 |
| Shrinkage rate in heat relaxation step | | % | 45 | 45 | 45 | 45 | 32 |
| Separator thickness | | μm | 17.2 | 17.1 | 17 | 16.9 | 17 |
| Porosity of separator | | % | 48 | 46 | 44 | 43 | 50 |
| Air permeability resistance of separator (14 μm thickness conversion) | | s/100 cm$^3$ | 185 | 225 | 241 | 249 | 172 |
| Puncture strength of separator (14 μm thickness conversion) | | gf | 345 | 368 | 374 | 328 | 330 |
| MD heat shrinkage rate of separator at 105 °C | | % | 2.1 | 2.2 | 2.1 | 2.4 | 3.8 |
| TD heat shrinkage rate of separator at 105 °C | | % | 0.1 | 0.1 | 0.2 | 0.1 | 0.2 |
| Fuse short-circuit test | Fuse temperature | °C | 125 | 126 | 124 | 124 | 127 |
| | Short-circuit temperature | °C | 205 | 208 | 210 | 201 | 206 |
| Heating test | | | Good | Good | Good | Good | Good |

[Table 12]

Table 12 (Example C). Evaluation of PP/PE/PP three-layer separator

| Item | Unit | Comparative Example | | | |
|---|---|---|---|---|---|
| | | 1 | 2 | 3 | 4 |
| MFR of PP layer | g/10 min | 0.63 | 0.52 | 0.51 | 0.82 |
| Density of PP | g/cm$^3$ | 0.91 | 0.91 | 0.91 | 0.91 |
| Mw of PP | - | 870000 | 900000 | 900000 | 740000 |
| Mw/Mn of PP | - | 5.2 | 7.7 | 5.2 | 6 |
| Pentad fraction of PP | % | 96.3 | 93.6 | 99.3 | 90.1 |
| Melt tension of PP layer | mN | 25 | 33 | 26 | 17 |

(continued)

| Item | | Unit | Comparative Example | | | |
|---|---|---|---|---|---|---|
| | | | 1 | 2 | 3 | 4 |
| MD/TD orientation ratio | | - | 5.2 | | 5.5 | 5.3 |
| Shrinkage rate in heat relaxation step | | % | 45 | | 28 | 29 |
| Separator thickness | | μm | 17.2 | | 16.9 | 17 |
| Porosity of separator | | % | 49 | | 52 | 47 |
| Air permeability resistance of separator (14 μm thickness conversion) | | s/100 3 cm | 187 | Not possible to produce | 169 | 253 |
| Puncture strength of separator (14 μm thickness conversion) | | gf | 322 | | 326 | 310 |
| MD heat shrinkage rate of separator at 105 °C | | % | 2.8 | | 4.3 | 4.6 |
| TD heat shrinkage rate of separator at 105 °C | | % | 0.2 | | 0.2 | 0.3 |
| Fuse short-circuit test | Fuse temperature | °C | 125 | | 127 | 127 |
| | Short-circuit temperature | °C | 198 | | 206 | 196 |
| Heating test | | | Poor | | Poor | Poor |

[Table 13]

Table 13 (Example C). Evaluation of separator composed of PP single-layer microporous layer

| Item | | Unit | Example | Comparative Example |
|---|---|---|---|---|
| | | | 6 | 5 |
| MFR of PP layer | | g/10 min | 0.51 | 0.63 |
| Density of PP | | g/cm$^3$ | 0.91 | 0.91 |
| Mw of PP | | - | 900000 | 900000 |
| Mw/Mn of PP | | - | 5.2 | 5.2 |
| Pentad fraction of PP | | % | 99.3 | 96.3 |
| Melt tension of PP layer | | mN | 26 | 25 |
| MD/TD orientation ratio | | - | 5.2 | 5.2 |
| Separator thickness | | μm | 14.3 | 14.2 |
| Porosity of separator | | % | 46 | 45 |
| Air permeability resistance of separator (14 μm thickness conversion) | | s/100 cm$^3$ | 172 | 178 |
| Puncture strength of separator (14 μm thickness conversion) | | gf | 320 | 295 |
| MD heat shrinkage rate of separator at 105 °C | | % | 2.1 | 2.8 |
| TD heat shrinkage rate of separator at 105 °C | | % | 0.1 | 0.1 |
| Fuse short-circuit test | Fuse temperature | °C | 170 | 167 |
| | Short-circuit temperature | °C | 209 | 198 |
| Heating test | | | Good | Poor |

INDUSTRIAL APPLICABILITY

The electricity storage device separator according to the first aspect of the present disclosure has high strength and can be made thin, and can be suitably used as a separator for an electricity storage device, for example, a lithium-ion secondary cell.

The electricity storage device separator according to the second aspect of the present disclosure has high safety and can be made thin, and can be suitably used as a separator for an electricity storage device, for example, a lithium-ion secondary cell.

**Claims**

1. An electricity storage device separator comprising

   a microporous layer (X) mainly composed of a polyolefin (A), wherein
   a melt flow rate (MFR) of the microporous layer (X) at a load of 2.16 kg and a temperature of 230 °C is 0.9 g/10 min or less, and
   in an MD-TD surface observation or an ND-MD cross-section observation of the microporous layer (X) by a scanning electron microscope (SEM), an average long pore diameter of pores present in the microporous layer (X) is 100 nm or more.

2. The electricity storage device separator according to claim 1, wherein
   in an MD-TD surface observation or an ND-MD cross-section observation of the microporous layer (X) by the scanning electron microscope (SEM), a maximum long pore diameter of pores present in the microporous layer (X) is 100 nm or more and 400 nm or less.

3. The electricity storage device separator according to claim 1 or 2, wherein
   a melt tension of the microporous layer (X) when measured at a temperature of 230 °C is 16 mN or more.

4. The electricity storage device separator according to claim 1 or 2, wherein
   a melt tension of the microporous layer (X) when measured at a temperature of 230 °C is 16 mN or more and 40 mN or less.

5. The electricity storage device separator according to any one of claims 1 to 4, wherein
   a ratio (SMD/STD) of tensile strength in machine direction (SMD) to tensile strength in width direction (STD) of the electricity storage device separator is SMD/STD > 5.

6. The electricity storage device separator according to any one of claims 1 to 5, wherein

   a heat shrinkage rate of the electricity storage device separator after 1 h of heat treatment at 105 °C is 1% or less in TD and 4% or less in MD, and
   a heat shrinkage rate of the electricity storage device separator after 1 h of heat treatment at 120 °C is 1% or less in TD and 10% or less in MD.

7. The electricity storage device separator according to any one of claims 1 to 6, wherein
   an air permeability of the electricity storage device separator when converted into a thickness of 14 $\mu$m is 250 s/100 cm$^3$ or less.

8. The electricity storage device separator according to any one of claims 1 to 7 having a thickness of 8 $\mu$m or more and 18 $\mu$m or less and a puncture strength of 230 gf or more when the separator is converted into a thickness of 14 $\mu$m.

9. The electricity storage device separator according to any one of claims 1 to 8, wherein
   the polyolefin (A) comprises polypropylene.

10. The electricity storage device separator according to claim 9, wherein
    a ratio of the polypropylene to the polyolefin (A) is 50 to 100% by mass.

11. The electricity storage device separator according to claim 9 or 10, wherein

a pentad fraction of the polypropylene is 95.0% or greater.

12. The electricity storage device separator according to any one of claims 1 to 11, wherein
a weight average molecular weight (Mw) of the microporous layer (X) is 500,000 or greater and 1,500,000 or less.

13. The electricity storage device separator according to any one of claims 1 to 12, wherein
a value (Mw/Mn) obtained by dividing a weight average molecular weight (Mw) by a number average molecular weight (Mn) of the microporous layer (X) is 6 or less.

14. The electricity storage device separator according to any one of claims 1 to 13, further comprising a microporous layer (Y) mainly composed of a polyolefin (B).

15. The electricity storage device separator according to claim 14, wherein

in an ND-MD cross-section observation of the microporous layer (X) and the microporous layer (Y) by the scanning electron microscope (SEM),
an average long pore diameter of pores present in the microporous layer (X) is 100 nm or more and 400 nm or less, and
an average long pore diameter of pores present in the microporous layer (Y) is larger than the average long pore diameter of pores present in the microporous layer (X).

16. The electricity storage device separator according to claim 14 or 15, wherein in an ND-MD cross-section observation of the microporous layer (X) and the microporous layer (Y) by the scanning electron microscope (SEM), an average long pore diameter of pores present in the microporous layer (Y) is 150 nm or more and 2000 nm or less and is 1.2 times or greater and 10 times or less of an average long pore diameter of pores present in the microporous layer (X).

17. The electricity storage device separator according to any one of claims 14 to 16, wherein

a main component of the polyolefin (A) is polypropylene, and
a main component of the polyolefin (B) is polyethylene.

18. The electricity storage device separator according to any one of claims 1 to 17, wherein
a porosity of the electricity storage device separator is 20% or greater and 70% or less.

19. The electricity storage device separator according to any one of claims 1 to 18, wherein

a main component of the polyolefin (A) is polypropylene, and
a melt flow rate (MFR) of the polypropylene at a load of 2.16 kg and a temperature of 230 °C is 0.6 g/10 min or less.

20. An electricity storage device, comprising
the electricity storage device separator according to any one of claims 1 to 19.

21. An electricity storage device separator comprising a microporous layer, wherein

the microporous layer comprises a polyolefin having a melt flow rate (MFR) of 0.7 g/10 min or less at a load of 2.16 kg and a temperature of 230 °C,
a short-circuit temperature in a fuse short-circuit test of the electricity storage device separator is 200 °C or higher, and
a heat shrinkage rate in width direction (TD) and a heat shrinkage rate in machine direction (MD) when the electricity storage device separator is heat-treated at 105 °C for 1 h are TD $\leq$ 1% and MD $\leq$ 4%, respectively.

22. The electricity storage device separator according to claim 21, wherein the polyolefin is mainly composed of polypropylene.

23. The electricity storage device separator according to claim 21 or 22, wherein a value (Mw/Mn) obtained by dividing a weight average molecular weight (Mw) by a number average molecular weight (Mn) of the polyolefin is 7 or less.

24. The electricity storage device separator according to any one of claims 21 to 23, wherein the fuse temperature in the fuse short-circuit test is 150 °C or lower.

25. The electricity storage device separator according to any one of claims 21 to 24, comprising a multilayer structure of a microporous layer mainly composed of polypropylene and a microporous layer mainly composed of polyethylene.

26. The electricity storage device separator according to any one of claims 21 to 25, wherein in a wide-angle X-ray scattering measurement of the microporous layer, a ratio MD/TD of an orientation ratio in machine direction (MD) to an orientation ratio in width direction (TD) is 1.3 or greater.

27. The electricity storage device separator according to any one of claims 21 to 26 having a thickness of 18 $\mu$m or less, a porosity of 42% or greater, and an air permeability resistance of 250 s/100 cm$^3$ or less when converted into a thickness of 14 $\mu$m.

28. An electricity storage device, comprising the electricity storage device separator according to any one of claims 21 to 27.

# FIG. 1

## INTERNATIONAL SEARCH REPORT

| International application No. |
|---|
| **PCT/JP2021/034173** |

### A. CLASSIFICATION OF SUBJECT MATTER

*H01G 11/06*(2013.01)i; *H01G 11/52*(2013.01)i; *H01M 50/409*(2021.01)i
FI:   H01M50/409; H01G11/06; H01G11/52

According to International Patent Classification (IPC) or to both national classification and IPC

### B. FIELDS SEARCHED

Minimum documentation searched (classification system followed by classification symbols)

   H01G11/06; H01G11/52; H01M50/409

Documentation searched other than minimum documentation to the extent that such documents are included in the fields searched

   Published examined utility model applications of Japan 1922-1996
   Published unexamined utility model applications of Japan 1971-2021
   Registered utility model specifications of Japan 1996-2021
   Published registered utility model applications of Japan 1994-2021

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | WO 2019/103947 A2 (ASAHI KASEI KABUSHIKI KAISHA) 31 May 2019 (2019-05-31) claims, examples | 1-28 |
| Y | | 21-28 |
| X | JP 2010-092879 A (MITSUBISHI CHEMICALS CORP) 22 April 2010 (2010-04-22) claims, examples | 1-9, 13, 18, 20 |
| Y | | 21-24, 26-28 |
| Y | WO 2012/102129 A1 (TORAY BATTERY SEPARATOR FILM CO., LTD) 02 August 2012 (2012-08-02) claims, paragraphs [0077], [0078] | 21-28 |
| Y | WO 2017/026482 A1 (UBE INDUSTRIES) 16 February 2017 (2017-02-16) claims | 21-28 |
| A | WO 2008/093572 A1 (ASAHI KASEI E-MATERIALS CORPORATION) 07 August 2008 (2008-08-07) claims, examples | 1-28 |

☐ Further documents are listed in the continuation of Box C.   ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **13 October 2021** | **26 October 2021** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

## INTERNATIONAL SEARCH REPORT
### Information on patent family members

International application No.

**PCT/JP2021/034173**

| Patent document cited in search report | | | Publication date (day/month/year) | Patent family member(s) | | | Publication date (day/month/year) |
|---|---|---|---|---|---|---|---|
| WO | 2019/103947 | A2 | 31 May 2019 | EP | 3676893 | A | |
| | | | | claims, examples | | | |
| | | | | CN | 111279519 | A | |
| | | | | KR | 10-2020-0078482 | A | |
| JP | 2010-092879 | A | 22 April 2010 | (Family: none) | | | |
| WO | 2012/102129 | A1 | 02 August 2012 | US | 2013/0302696 | A1 | |
| | | | | claims, paragraphs [0103], [0104] | | | |
| | | | | CN | 103328552 | A | |
| | | | | KR | 10-2014-0043706 | A | |
| WO | 2017/026482 | A1 | 16 February 2017 | US | 2018/0233730 | A1 | |
| | | | | claims | | | |
| | | | | CN | 107921728 | A | |
| WO | 2008/093572 | A1 | 07 August 2008 | US | 2010/0021822 | A1 | |
| | | | | claims, examples | | | |
| | | | | EP | 2108675 | A1 | |
| | | | | CN | 101616968 | A | |
| | | | | KR | 10-2009-0104086 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018030992 A
- JP 2013517152 W
- JP 2016022676 A
- JP 2012092286 A
- WO 2010079784 A
- WO 2017138512 A
- JP 2016022679 A